(19) Europäisches Patentamt
European Patent Office
Office européen des brevets

(11) **EP 3 751 920 B1**

(12) **EUROPEAN PATENT SPECIFICATION**

(45) Date of publication and mention
of the grant of the patent:
**27.03.2024 Bulletin 2024/13**

(21) Application number: **20738662.4**

(22) Date of filing: **10.01.2020**

(51) International Patent Classification (IPC):
*H04W 64/00* (2009.01)    *H04W 48/12* (2009.01)
*H04W 24/10* (2009.01)    *H04L 5/00* (2006.01)
*H04J 11/00* (2006.01)    *H04W 24/08* (2009.01)

(52) Cooperative Patent Classification (CPC):
**H04W 48/12; H04J 11/0069; H04L 5/0048;**
**H04L 5/0094; H04W 24/10; H04W 64/00;**
H04J 11/005; H04J 11/0073; H04J 11/0076;
H04J 11/0079; H04L 5/001; H04W 24/08

(86) International application number:
**PCT/KR2020/000504**

(87) International publication number:
**WO 2020/145739 (16.07.2020 Gazette 2020/29)**

(54) **METHOD FOR OBTAINING POSITIONING INFORMATION IN WIRELESS COMMUNICATION SYSTEM AND APPARATUS THEREFOR**

VERFAHREN ZUM ERHALT VON SYSTEMINFORMATIONEN IN EINEM DRAHTLOSKOMMUNIKATIONSSYSTEM UND VORRICHTUNG DAFÜR

PROCÉDÉ POUR OBTENIR DES INFORMATIONS DE POSITION DANS UN SYSTÈME DE COMMUNICATION SANS FIL ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2019 US 201962791523 P**

(43) Date of publication of application:
**16.12.2020 Bulletin 2020/51**

(73) Proprietor: **LG Electronics Inc.**
**07336 SEOUL (KR)**

(72) Inventors:
• **CHA, Hyunsu**
**Seoul 06772 (KR)**
• **YOON, Sukhyon**
**Seoul 06772 (KR)**
• **KIM, Kijun**
**Seoul 06772 (KR)**
• **KO, Hyunsoo**
**Seoul 06772 (KR)**

(74) Representative: **Plasseraud IP**
**66, rue de la Chaussée d'Antin**
**75440 Paris Cedex 09 (FR)**

(56) References cited:
EP-A1- 3 796 587         WO-A1-2020/145700
WO-A1-2020/167046        WO-A1-2020/167057
KR-B1- 101 738 162       US-A1- 2011 081 933
US-A1- 2016 309 468      US-A1- 2017 111 880
US-A1- 2018 020 423      US-A1- 2018 317 111

- FRAUNHOFER IIS ET AL: "NR beam management supporting multi-gNB measurements for positioning", 3GPP DRAFT; R1-1813583_NR_MULTI_TRP_BEAM_MANAGEMENT_FO R_TDOA_POSITIONING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Spokane, US; 20181112 - 20181116 11 November 2018 (2018-11-11), XP051555639, Retrieved from the Internet: URL:http://www.3gpp.org/ftp/Meetings%5F3GP P%5FSYNC/RAN1/Docs/R1%2D1813583%2Ezip [retrieved on 2018-11-11]
- ERICSSON: "RAT dependent NR positioning solutions", 3GPP DRAFT; R1-1813592 RAT DEPENDENT NR POSITIONING SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, United States; 20181112 - 20181116 11 November 2018 (2018-11-11), XP051555648, Retrieved from the Internet: URL:http://www.3gpp.org/ftp/Meetings%5F3GP P%5FSYNC/RAN1/Docs/R1%2D1813592%2Ezip [retrieved on 2018-11-11]
- LG ELECTRONICS: "Discussions on Possible Techniques for NR Positioning", 3GPP DRAFT; R1-1812595, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 November 2018 (2018-11-16), pages 1-8, XP051478824, Retrieved from the Internet: URL:http://www.3gpp.org/ftp/tsg%5Fran/WG1% 5FRL1/TSGR1%5F95/Docs/R1%2D1812595%2Ez ip

**Description**

**TECHNICAL FIELD**

The present disclosure relates to a method of acquiring positioning information in a wireless communication system and an apparatus therefor and, more particularly, to a method of acquiring positioning information by receiving a positioning reference signal (PRS), and an apparatus therefor.

**BACKGROUND ART**

As more and more communication devices require larger communication capacities, there is a need for enhanced mobile broadband communication (eMBB), compared to legacy radio access technologies (RATs). In addition, massive machine type communications (mMTC) which connects multiple devices and objects to one another to provide various services at any time in any place is one of main issues to be considered for future-generation communications. Besides, a communication system design which considers services sensitive to reliability and latency is under discussion. As such, the introduction of a future-generation RAT in consideration of eMBB, mMTC, ultra-reliable and low-latency communication (URLLC), and so on is under discussion. In the present disclosure, this technology is referred to as New RAT, for the convenience's sake.

The 3GPP Draft No. R1-1813583, entitled "NR beam management supporting multi-gNB measurements for positioning," discusses how to enable the necessary measurements on reference signals used for positioning that are transmitted (or received) within highly directional beams from (or at) different locations. The 3GPP Draft No. R1-1813592, entitled "RAT dependent NR positioning solutions," discusses some RAT dependent NR positioning solution concepts. The European patent application publication No. EP 3 796 587 A1 describes a method for transmitting and receiving positioning reference signal, and an apparatus therefor.

**DETAILED DESCRIPTION OF THE DISCLOSURE**

**Technical Problems**

The present disclosure provides a method of acquiring positioning information and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solutions**

According to an aspect of the present disclosure, provided herein is a method of acquiring positioning information by a user equipment (UE) in a wireless communication system as set forth in the appended claims.

According to another aspect of the present disclosure, provided herein is a user equipment (UE) as set forth in the appended claims.

In the following, embodiments and/or examples not falling within the scope of the appended claims should be understood as mere examples useful for understanding the invention.

**Advantageous Effects**

According to the present disclosure, accuracy may be improved in measuring the position of a UE.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**Description of Drawings**

FIG. 1 is a view illustrating an example of a network architecture of an NR system.
FIGS. 2 to 4 are views illustrating an artificial intelligence (AI) system and apparatus for implementing embodiments of the present disclosure.
FIG. 5 is a view illustrating the control-plane and user-plane architecture of radio interface protocols between a user equipment (UE) and an evolved UMTS terrestrial radio access network (E-UTRAN) in conformance to a 3rd generation partnership project (3GPP) radio access network standard.

FIG. 6 is a view illustrating physical channels and a general signal transmission method using the physical channels in a 3GPP system.

FIG. 7 is a view for explaining an embodiment of a discontinuous reception (DRX) operation.

FIG. 8 illustrates an exemplary pattern to which a positioning reference signal (PRS) is mapped in an LTE system.

FIGS. 9 and 10 are views illustrating the architecture of a system for measuring the position of a UE and a procedure of measuring the position of the UE.

FIG. 11 illustrates an exemplary protocol layer used to support LTE positioning protocol (LPP) message transfer.

FIG. 12 is a view illustrating an exemplary protocol layer used to support NR positioning protocol A (NRPPa) protocol data unit (PDU) transfer.

FIG. 13 is a view illustrating an embodiment of a observed time difference of arrival (OTDOA) positioning method.

FIGS. 14 and 15 are views illustrating a structure and a method for transmission of a synchronization signal block (SSB) used in an NR system.

FIG. 16 is a view illustrating a reporting procedure of channel state information (CSI).

FIGS. 17 to 19 are views illustrating structures of a radio frame and slots used in a new RAT (NR) system.

FIG. 20 illustrates exemplary allocation of PRB resources according to the present disclosure.

FIG. 21 illustrates an exemplary configuration of a PRS occasion according to the present disclosure.

FIGS. 22 to 25 are views illustrating operation implementation examples of a UE, a BS, and a location server according to an embodiment of the present disclosure.

FIG. 26 is a view illustrating an exemplary wireless communication environment to which embodiments of the present disclosure are applicable.

FIGS. 27 to 31 are views illustrating exemplary various wireless devices and an exemplary signal processing circuit to which embodiments of the present disclosure are applicable.

FIG. 32 illustrates an exemplary location server to which embodiments of the present disclosure are applicable.

## BEST MODE FOR CARRYING OUT THE DISCLOSURE

The configuration, operation, and other features of the present disclosure will readily be understood with embodiments of the present disclosure described with reference to the attached drawings. Embodiments of the present disclosure as set forth herein are examples in which the technical features of the present disclosure are applied to a 3rd generation partnership project (3GPP) system.

While embodiments of the present disclosure are described in the context of long term evolution (LTE) and LTE-advanced (LTE-A) systems, they are purely exemplary. Therefore, the embodiments of the present disclosure are applicable to any other communication system as long as the above definitions are valid for the communication system.

The term, base station (BS) may be used to cover the meanings of terms including remote radio head (RRH), evolved Node B (eNB or eNode B), transmission point (TP), reception point (RP), relay, and so on.

The 3GPP communication standards define downlink (DL) physical channels corresponding to resource elements (REs) carrying information originated from a higher layer, and DL physical signals which are used in the physical layer and correspond to REs which do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An RS, also called a pilot signal, is a signal with a predefined special waveform known to both a gNode B (gNB) and a user equipment (UE). For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the present disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal. In the present disclosure, particularly a time-frequency resource or an RE which is allocated to or belongs to the PDCCH/PCFICH/PHICH/PDSCH/PUCCH/PUSCH/PRACH is referred to as a PDCCH RE/PCFICH RE/PHICH RE/PDSCH RE/PUCCH RE/PUSCH RE/PRACH RE or a PDCCH resource/PCFICH resource/PHICH resource/PDSCH resource/PUCCH resource/PUSCH resource/PRACH resource. Hereinbelow, if it is said that a UE transmits a PUCCH/PUSCH/PRACH, this means that UCI/UL data/a random access signal is transmitted on or through the PUCCH/PUSCH/PRACH. Further, if it is said that a gNB transmits a PDCCH/PCFICH/PHICH/PDSCH, this means that DCFcontrol information is transmitted on or through the PDCCH/PCFICH/PHICH/PDSCH.

Hereinbelow, an orthogonal frequency division multiplexing (OFDM) symbol/carrier/subcarrier/RE to which a CRS/DMRS/CSI-RS/SRS/UE-RS is allocated to or for which the CRS/DMRS/CSI-RS/SRS/UE-RS is configured is referred to as a CRS/DMRS/CSI-RS/SRS/UE-RS symbol/carrier/subcarrier/RE. For example, an OFDM symbol to which a tracking RS (TRS) is allocated or for which the TRS is configured is referred to as a TRS symbol, a subcarrier to which a TRS is allocated or for which the TRS is configured is referred to as a TRS subcarrier, and an RE to which a TRS is allocated or for which the TRS is configured is referred to as a TRS RE. Further, a subframe configured to transmit a TRS is referred to as a TRS subframe. Further, a subframe carrying a broadcast signal is referred to as a broadcast subframe or a PBCH subframe, and a subframe carrying a synchronization signal (SS) (e.g., a primary synchronization signal (PSS) and/or a secondary synchronization signal (SSS)) is referred to as an SS subframe or a PSS/SSS subframe. An OFDM symbol/subcarrier/RE to which a PSS/SSS is allocated or for which the PSS/SSS is configured is referred to as a PSS/SSS symbol/subcarrier/RE.

In the present disclosure, a CRS port, a UE-RS port, a CSI-RS port, and a TRS port refer to an antenna port configured to transmit a CRS, an antenna port configured to transmit a UE-RS, an antenna port configured to transmit a CSI-RS, and an antenna port configured to transmit a TRS, respectively. Antenna port configured to transmit CRSs may be distinguished from each other by the positions of REs occupied by the CRSs according to CRS ports, antenna ports configured to transmit UE-RSs may be distinguished from each other by the positions of REs occupied by the UE-RSs according to UE-RS ports, and antenna ports configured to transmit CSI-RSs may be distinguished from each other by the positions of REs occupied by the CSI-RSs according to CSI-RS ports. Therefore, the term CRS/UE-RS/CSI-RS/TRS port is also used to refer to a pattern of REs occupied by a CRS/UE-RS/CSI-RS/TRS in a predetermined resource area.

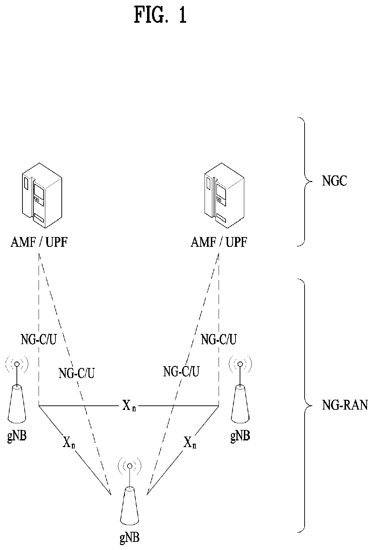

FIG. 1 is a view illustrating an example of a network architecture of an NR system.

The structure of the NR system broadly includes a next-generation radio access network (NG-RAN) and a next-generation core (NGC) network. The NGC is also referred to as a 5GC.

Referring to FIG. 1, the NG-RAN includes gNBs that provide a UE with user plane protocol (e.g., SDAP, PDCP, RLC, MAC, and PHY) and control plane protocol (e.g., RRC, PDCP, RLC, MAC, and PHY) terminations. The gNBs are interconnected through an Xn interface. The gNBs are connected to the NGC through an NG interface. For example, the gNBs are connected to a core network node having an access and mobility management function (AMF) through an N2 interface, which is one of interfaces between the gNBs and the NGC and to a core network node having a user plane function (UPF) through an N3 interface, which is another interface between the gNB and the NGC. The AMF and the UPF may be implemented by different core network devices or may be implemented by one core network device. In the RAN, signal transmission/reception between a BS and a UE is performed through a radio interface. For example, signal transmission/reception between the BS and the UE in the RAN is performed through a physical resource (e.g., a radio frequency (RF)). In contrast, signal transmission/reception between the gNB and the network functions (e.g., AMF and UPF) in the core network may be performed through physical connection (e.g., optical cable) between the core network nodes or through logical connection between the core network functions, rather than through the radio interface.

Now, 5G communication including an NR system will be described.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional tasks and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both tasks and entertainment. The cloud storage is a special use case which accelerates growth of uplink data transmission rate. 5G is also used for a remote task of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential IoT devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential for smart grid control, industrial automation, robotics, and drone control and adjustment.

Next, a plurality of use cases in the 5G communication system including the NR system will be described in more detail.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

### <Artificial Intelligence (AI)>

AI refers to a field that studies AI or methodology capable of making AI. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process for updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN when the label for the training data is not given. Reinforcement learning may refer to a training method in which an agent defined in a certain environment is trained to select a behavior or a behavior order that maximizes accumulative compensation in each state.

Machine learning, which is implemented as a deep neural network (DNN) including a plurality of hidden layers among ANNs, is also called deep learning. Deep learning is a part of machine learning. Hereinbelow, machine learning includes deep learning.

### <Robot>

A robot may refer to a machine for automatically processing or executing a given task using capabilities possessed thereby. In particular, a robot having a function of recognizing an environment and performing self-determination and operation may be referred to as an intelligent robot

A robot may be categorized into an industrial robot, a medical robot, a household robot, a military robot, etc., according to a purpose or field.

A robot may include a driving unit including an actuator or a motor to perform various physical operations such as movement of robot joints. A mobile robot may include a wheel, a brake, and a propeller in the driving unit to travel on the ground or fly.

### <Self-driving or autonomous driving)>

Self-driving refers to technology of self-driving. A self-driving vehicle refers to a vehicle traveling without manipulation of a user or with minimum manipulation of a user.

For example, self-driving may include technology for maintaining a lane in which a vehicle is traveling, technology for automatically adjusting speed, such as adaptive cruise control, technology for autonomously traveling along a determined path, and technology for traveling by automatically setting a path if a destination is set.

A vehicle may include a vehicle having only an internal combustion engine, a hybrid vehicle having an internal combustion engine and an electric motor together, and an electric vehicle having only an electric motor and include not only an automobile but also a train, a motorcycle, and the like.

In this case, the self-driving vehicle may be understood as a robot having a self-driving function.

**<Extended Reality (XR)>**

XR collectively refers to virtual reality (VR), augmented reality (AR), and mixed reality (MR). VR technology provides a real-world object and a background only as computer-generated (CG) images, AR technology provides virtual CG images overlaid on actual object images, and MR technology is a computer graphic technology that mixes and combines virtual objects and the real world and then provides the mixed and combined result.

MR technology is similar to AR technology in that MR technology shows a real object and a virtual object together. However, MR technology and AR technology are different in that AR technology uses a virtual object in the form of compensating a real object, whereas MR technology uses the virtual object and the real object as an equal property.

XR technology may be applied to a head-mounted display (HMD), a head-up display (HUD), a cellular phone, a tablet PC, a laptop computer, a desktop computer, a TV, digital signage, etc. A device to which XR technology is applied may be referred to as an XR device.

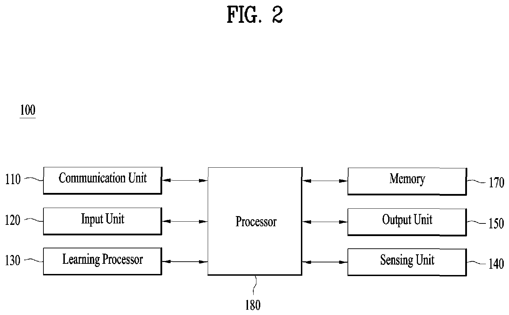

FIG. 2 illustrates an AI apparatus 100 for implementing embodiments of the present disclosure.

The AI apparatus 100 may be implemented by a fixed device or a mobile device, such as a TV, a projector, a smartphone, a desktop computer, a notebook, a digital broadcast terminal, a personal digital assistant (PDA), a portable multimedia player (PMP), a navigation, a tablet PC, a wearable device, a set-top box (STB), a DMB receiver, a radio, a washing machine, a refrigerator, a desktop computer, digital signage, a robot, a vehicle, etc.

Referring to FIG. 2, the AI apparatus 100 may include a communication unit 110, an input unit 120, a learning processor 130, a sensing unit 140, an output unit 150, a memory 170, and a processor 180.

The communication unit 110 may transmit and receive data to and from external devices such as other AI apparatuses 100a to 100e or an AI server 200, using wired/wireless communication technology. For example, the communication unit 110 may transmit and receive sensor information, user input, a learning model, and a control signal to and from external devices.

In this case, communication technology used by the communication unit 110 includes global system for mobile communication (GSM), code-division multiple access (CDMA), long-term evolution (LTE), 5G, wireless LAN (WLAN), Wi-Fi, Bluetooth ™, radio frequency identification (RFID), infrared data association (IrDA), ZigBee, near field communication (NFC), etc.

The input unit 120 may acquire a variety of types of data.

The input unit 120 may include a camera for inputting a video signal, a microphone for receiving an audio signal, and a user input unit for receiving information from a user. Herein, the camera or the microphone may be treated as a sensor and a signal obtained from the camera or the microphone may be referred to as sensing data or sensor information.

The input unit 120 may acquire training data for model learning and input data to be used upon acquiring output using a learning model. The input unit 120 may obtain raw input data. In this case, the processor 180 or the learning processor 130 may extract an input feature as preprocessing for the input data.

The learning processor 130 may train a model composed of an ANN using the training data. Herein, the trained ANN may be referred to as the learning model. The learning model may be used to infer a result value for new input data rather than training data and the inferred value may be used as a basis for determination for performing any operation.

In this case, the learning processor 130 may perform AI processing together with a learning processor 240 of the AI server 200.

The learning processor 130 may include a memory integrated or implemented in the AI apparatus 100. Alternatively, the learning processor 130 may be implemented using the memory 170, an external memory directly connected to the AI apparatus 100, or a memory maintained in an external device.

The sensing unit 140 may acquire at least one of internal information of the AI apparatus 100, surrounding environment information of the AI apparatus 100, and the user information, using various sensors.

Sensors included in the sensing unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, a lidar, a radar, etc.

The output unit 150 may generate output related to a visual, auditory, or tactile sense.

The output unit 150 may include a display unit for outputting visual information, a speaker for outputting auditory information, and a haptic module for outputting tactile information.

The memory 170 may store data for supporting various functions of the AI apparatus 100. For example, the memory 170 may store input data, training data, a learning model, a learning history, etc., obtained from the input unit 140a.

The processor 180 may determine at least one feasible operation of the AI apparatus 100, based on information which is determined or generated using a data analysis algorithm or a machine learning algorithm. The processor 180 may perform an operation determined by controlling constituent elements of the AI apparatus 100.

To this end, the processor 180 may request, search, receive, or use data of the learning processor 130 or the memory 170 and control the constituent elements of the AI apparatus 100 to perform a predicted operation among the at least one feasible operation, or an operation determined to be desirable.

If the processor 180 needs to be associated with an external device in order to perform the determined operation, the processor 180 may generate a control signal for controlling the external device and transmit the generated control signal to the external device.

The processor 180 may obtain intention information for user input and determine requirements of the user based on the acquired intention information.

The processor 180 may acquire the intention information corresponding to user input, using at least one of a speech-to-text (STT) engine for converting audio input into a text stream or a natural language processing (NLP) engine for obtaining intention information of a natural language.

At least a part of at least one of the STT engine or the NLP engine may be composed of an ANN trained according to a machine learning algorithm. At least one of the STT engine or the NLP engine may be trained by the learning processor 130, a learning processor 240 of the AI server 200, or by distribution processing of the learning processors 130 and 240.

The processor 180 may collect history information including the operation contents of the AI apparatus 100 or feedback for operation by a user and store the collected information in the memory unit 170 or the learning processor unit 130 or transmit the collected information to an external device such as the AI server 200. The collected history information may be used to update a learning model.

The processor 180 may control at least a part of the constituent elements of the AI apparatus 100 in order to drive an application program stored in the memory 170. Further, the processor 180 may operate by combining two or more of the constituent elements included in the AI apparatus 100 in order to drive the application program.

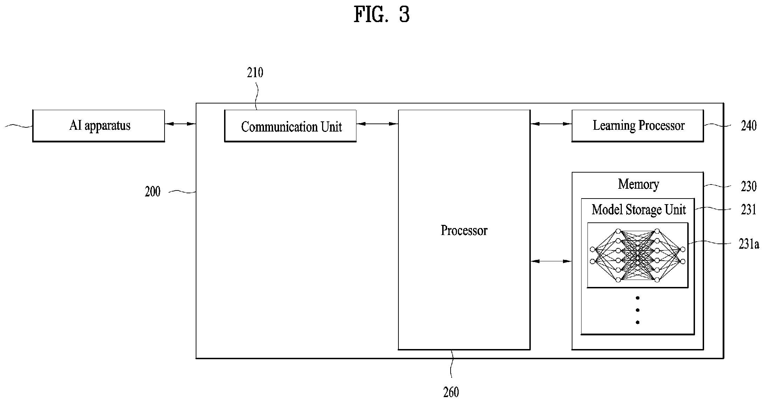

FIG. 3 illustrates an AI server 200 for implementing embodiments of the present disclosure.

Referring to FIG. 3, the AI server 200 may refer to a device that trains an ANN using a machine learning algorithm or uses the trained ANN. The AI server 200 may be composed of a plurality of servers to perform distributed processing or may be defined as a 5G network. The AI server 200 may be included as a partial constituent element of the AI apparatus 100 and may perform at least a part of AI processing together with the AI apparatus 100.

The AI server 200 may include a communication unit 210, a memory 230, a learning processor 240, and a processor 260.

The communication unit 210 may transmit and receive data to and from an external device such as the AI apparatus 100.

The memory 230 may include a model storage unit 231. The model storage unit 231 may store a model, which is training or is trained, (or an ANN 231a) through the learning processor 240.

The learning processor 240 may train the ANN 231a using training data. A learning model may be used in a state in which the ANN is mounted in the AI server 200 or the ANN is mounted in an external device such as the AI apparatus 100.

The learning model may be implemented by hardware, software, or a combination of hardware and software. If the learning model is fully or partially implemented by software, one or more instructions constituting the learning model may be stored in memory 230.

The processor 260 may infer a result value for new input data using the learning model and generate a response or control command based on the inferred result value.

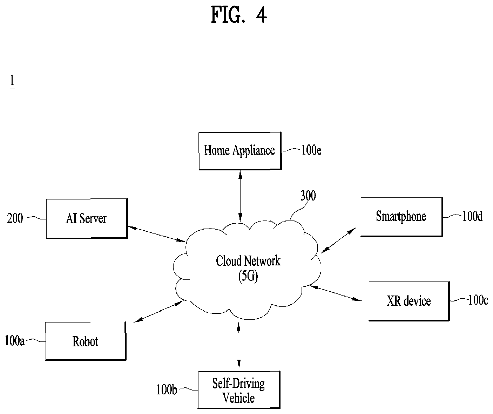

FIG. 4 illustrates an AI system 1 for implementing embodiments of the present disclosure.

Referring to FIG. 4, at least one of an AI server 200, a robot 100a, a self-driving vehicle 100b, an XR device 100c, a smartphone 100d, or a home appliance 100e, constituting the AI system 1, is connected to a cloud network 10. The robot 100a, the self-driving vehicle 100b, the XR device 100c, the smartphone 100d, and the home appliance 100e to which AI technology is applied may be referred to as AI apparatuses 100a to 100e.

The cloud network 10 may refer to a network that constitutes a part of cloud computing infrastructure or is present in the cloud computing infrastructure. The cloud network 10 may be configured using a 3G network, a 4G or LTE network, or a 5G network.

That is, each of the apparatuses 100a to 100e and 200 that constitute the AI system 1 may be connected to each other through the cloud network 10. Particularly, the apparatuses 100a through 100e and 200 may communicate with each other through an eNB but may directly communicate with each other without passing through the eNB.

The AI server 200 may include a server for performing AI processing and a server for performing operation upon big data.

The AI server 200 is connected through the cloud network 10 to at least one of the robot 100a, the self-driving vehicle 100b, the XR device 100c, the smartphone 100d, or the home appliance 100e, which are AI apparatuses constituting the AI system 1, and may aid in at least a part of AI processing of the connected AI apparatuses 100a to 100e.

The AI server 200 may train the ANN according to the machine learning algorithm on behalf of the AI apparatuses 100a to 100e and may directly store a learning model or transmit the learning model to the AI apparatuses 100a to 100e.

The AI server 200 may receive input data from the AI apparatuses 100a to 100e, infer a result value for the input data received using the learning model, generate a response or a control command based on the inferred result value, and transmit the response or the control command to the AI apparatuses 100a to 100e.

Alternatively, the AI apparatuses 100a to 100e may infer the result value for input data using a direct learning model and generate the response or the control command based on the inferred result value.

Hereinafter, various embodiments of the AI apparatuses 100a to 100e to which the above-described techniques are applied will be described. The AI apparatuses 100a to 100e illustrated in FIG. 4 may be a specific embodiment of the AI apparatus 100 illustrated in FIG. 2.

**<AI + robot>**

The robot 100a to which AI technology is applied may be implemented as a guide robot, a delivery robot, a cleaning robot, a wearable robot, an entertainment robot, a pet robot, an unmanned aerial robot, etc.

The robot 100a may include a robot control module for controlling operation. The robot control module may refer to a software module or a chip implementing the software module as hardware.

The robot 100a may acquire state information of the robot 100a using sensor information obtained from various types of sensors, detect (recognize) a surrounding environment and an object, generate map data, determine a moving path and a traveling plan, determine a response to user interaction, or determine operation.

To determine the moving path and traveling plan, the robot 100a may use the sensor information obtained from at least one sensor of a lidar, a radar, or a camera.

The robot 100a may perform the above-described operations using a learning model composed of at least one ANN. For example, the robot 100a may recognize the surrounding environment and the object using the learning model and determine operation using information about the recognized surrounding or information about the recognized object. The learning model may be trained directly from the robot 100a or trained from an external device such as the AI server 200.

Although the robot 100a generates a result using the direct learning model and performs operation, the robot 100a may transmit the sensor information to an external device such as the AI server 200 and receives a generated result to perform operation.

The robot 100a may determine the moving path and the traveling plan using at least one of the map data, object information detected from the sensor information, or object information acquired from an external device and control a driving unit so that the robot 100a may travel according to the determined moving path and traveling plan.

The map data may include object identification information regarding various objects arranged in a space in which the robot 100a moves. For example, the map data may include the object identification information regarding fixed objects such as walls or doors and mobile objects such as flower pots or desks. The object identification information may include a name, a type, a distance, and a position.

In addition, the robot 100a may perform operation or travel by controlling the driving unit based on control/interaction of the user. In this case, the robot 100a may acquire intention information of interaction caused by actions or voice utterance of the user, determine a response based on the acquired intention information, and perform operation.

**<AI + self-driving>**

The self-driving vehicle 100b to which AI technology is applied may be implemented as a mobile robot, a car, or an unmanned aerial vehicle.

The self-driving vehicle 100b may include a self-driving control module for a self-driving function. The self-driving control module may refer to a software module or a chip implementing the software module as hardware. Although the self-driving control module may be included in the self-driving vehicle 100b as a constituent element of the self-driving vehicle 100b, the self-driving control module may be configured as separate hardware and connected to the exterior of the self-driving vehicle 100b.

The self-driving vehicle 100b may acquire state information thereof using sensor information obtained from various types of sensors, detect (recognize) a surrounding environment and an object, generate map data, determine a moving path and a traveling plan, or determine operation.

To determine the moving path and traveling plan, the self-driving vehicle 100b may use the sensor information obtained from at least one sensor of a lidar, a radar, or a camera as in the robot 100a.

Particularly, the self-driving vehicle 100b may recognize an environment or an object for a region in which user view is blocked or a region separated from the user by a predetermined distance or more by receiving sensor information from external devices or receiving information directly recognized from external devices.

The self-driving vehicle 100b may perform the above-described operations using a learning model composed of at least one ANN. For example, the self-driving vehicle 100b may recognize a surrounding environment and an object using the learning model and determine a moving line for traveling using information about the recognized surrounding or information about the recognized object. The learning model may be trained directly from the self-driving vehicle 100b or trained from an external device such as the AI server 200.

Although the self-driving vehicle 100b generates a result using the direct learning model and performs operation, the self-driving vehicle 100b may transmit the sensor information to an external device such as the AI server 200 and receive a generated result to perform operation.

The self-driving vehicle 100b may determine a moving path and a traveling plan using at least one of object information detected from map data or sensor information or object information acquired from an external device and control a driving unit so that the self-driving vehicle 100b may travel according to the determined moving path and traveling plan

The map data may include object identification information regarding various objects arranged in a space (e.g., a road) in which the self-driving vehicle 100b travels. For example, the map data may include the object identification information regarding fixed objects such as street lights, rocks, or buildings and mobile objects such as mobile objects such as vehicles or pedestrians. The object identification information may include a name, a type, a distance, and a position.

In addition, the self-driving vehicle 100b may perform operation or travel by controlling the driving unit based on control/interaction of the user. In this case, the self-driving vehicle 100b may acquire intention information of interaction caused by actions or voice utterance of the user, determine a response based on the acquired intention information, and perform operation.

## <AI + XR>

The XR device 100c to which AI technology is applied may be implemented as a head-mounted display (HMD), a head-up display (HUD) mounted in a vehicle, a television, a smartphone, a computer, a wearable device, a home appliance, digital signage, a vehicle, a fixed or mobile robot, etc.

The XR device 100c acquires information about a surrounding space or a real object by analyzing three-dimensional (3D) point cloud data or image data, obtained through various sensors or from an external device, and generating position data and attribute data, for 3D points, render an XR object to be output, and output the rendered XR object. For example, the XR device 100c may map an XR object including additional information for a recognized object to the recognized object and output the XR object.

The XR device 100c may perform the above-described operations using a learning model composed of at least one ANN. For example, the XR device 100c may recognize a real object from 3D point cloud data or image data using the learning model and provide information corresponding to the recognized real object. The learning model may be trained directly from the XR device 100c or trained from an external device such as the AI server 200.

Although the XR device 100c generates a result using the direct learning model and performs operation, the XR device 100 may transmit the sensor information to an external device such as the AI server 200 and receive a generated result to perform operation.

## <AI + robot + self-driving>

The robot 100a to which AI technology is applied may be implemented as a guide robot, a delivery robot, a cleaning robot, a wearable robot, an entertainment robot, a pet robot, or an unmanned aerial robot.

The robot 100a to which AI technology and self-driving technology are applied may refer to a robot itself having a self-driving function or a robot 100a interacting with the self-driving vehicle 100b.

To robot 100a having the self-driving function may collectively refer to devices that move autonomously along a given moving line without user intervention or determine by itself a moving path and move.

The robot 100a and the self-driving vehicle 100b having the self-driving function may use a common sensing method to determine at least one of a moving path or a traveling plan. For example, the robot 100a having the self-driving function and the self-driving vehicle 100b may determine at least one of the moving path or the traveling plan using information sensed through a lidar, a radar, and a camera.

The robot 100a that interacts with the self-driving vehicle 100b may be present separately from the self-driving vehicle 100b so that the robot 100a may be associated with the self-driving function at the interior or exterior of the self-driving vehicle 100b or may perform operation in association with a user riding in the self-driving vehicle 100b.

The robot 100a that interacts with the self-driving vehicle 100b may control or assist the self-driving function of the self-driving vehicle 100b by acquiring sensor information on behalf of the self-driving vehicle 100b and providing the sensor information to the self-driving vehicle 100b or by acquiring the sensor information, generating surrounding environment information or object information, and providing the generated surrounding environment information or object information to the self-driving vehicle 100b.

Alternatively, the robot 100a interacting with the self-driving vehicle 100b may control the self-driving function of the self-driving vehicle 100b by monitoring a user riding in the self-driving vehicle 100b or interacting with the user. For example, when it is determined that the driver is in a drowsy state, the robot 100a may activate the self-driving function of the self-driving vehicle 100b or assist control of the driving unit of the self-driving vehicle 100b. The function of the self-driving vehicle 100b controlled by the robot 100a may include not only the self-driving function but also a function provided by a navigation system or an audio system installed in the self-driving vehicle 100b.

Alternatively, the robot 100a interacting with the self-driving vehicle 100b may provide information to the self-driving vehicle 100b or assist the function of the self-driving vehicle 100b, at the exterior of the self-driving vehicle 100b. For example, the robot 100a may provide traffic information including signal information, such as a smart signal light, to the self-driving vehicle 100b or may interact with the self-driving vehicle 100b to automatically connect an automatic electric charger of an electric vehicle to an inlet.

**<AI + robot+ XR>**

The robot 100a to which AI technology is applied may be implemented as a guide robot, a delivery robot, a cleaning robot, a wearable robot, an entertainment robot, a pet robot, an unmanned aerial robot, a drone, etc.

The robot 100a to which XR technology is applied may refer to a robot with which control/interaction is performed in the XR image. In this case, the robot 100a may be distinguished from the XR device 100c and may be interlocked with the XR device 100c.

When the robot 100a with which control/interaction is performed in the XR image acquires sensor information from sensors including a camera, the robot 100a or the XR device 100c may generate the XR image based on the sensor information and the XR device 100c may output the generated XR image. The robot 100a may operate based on a control signal input through the XR device 100c or on interaction with the user.

For example, the user may confirm an XR image corresponding to a viewpoint of the robot 100a linked remotely through an external device such as the XR device 100c, control a self-driving path of the robot 100a through interaction, control operation or traveling, or confirm information of a surrounding object.

**<AI + self-driving + XR>**

The self-driving vehicle 100b to which AI technology and XR technology are applied may be implemented as a mobile robot, a vehicle, or an unmanned aerial vehicle.

The self-driving vehicle 100b to which XR technology is applied may refer to a self-driving vehicle having a means for providing an XR image or a self-driving vehicle with which control/interaction is performed in the XR image. Particularly, the self-driving vehicle 100b to be controlled/interacted with in the XR image may be distinguished from the XR device 100c and interlocked with the XR device 100c.

The self-driving vehicle 100b having the means for providing the XR image may obtain sensor information from sensors including a camera and output the XR image generated based on the obtained sensor information. For example, the self-driving vehicle 100b may include a HUD therein to output the XR image, thereby providing a real object or an XR object corresponding to an object in a screen to a rider.

If the XR object is output to the HUD, at least a part of the XR object may be output so as to overlap with an actual object towards which the rider gazes is directed. On the other hand, if the XR object is output to a display mounted in the self-driving vehicle 100b, at least a part of the XR object may be output so as to overlap with an object on the screen. For example, the self-driving vehicle 100b may output XR objects corresponding to objects such as a lane, other vehicles, traffic lights, traffic signs, two-wheeled vehicles, pedestrians, buildings, etc.

If the self-driving vehicle 100b with which control/interaction is performed in the XR image acquires the sensor information from sensors including a camera, the self-driving vehicle 100b or the XR device 100c may generate an XR image based on the sensor information and the XR device 100c may output the generated XR image. The self-driving vehicle 100b may operate based on a control signal input from an external device such as the XR device 100c or on interaction with the user.

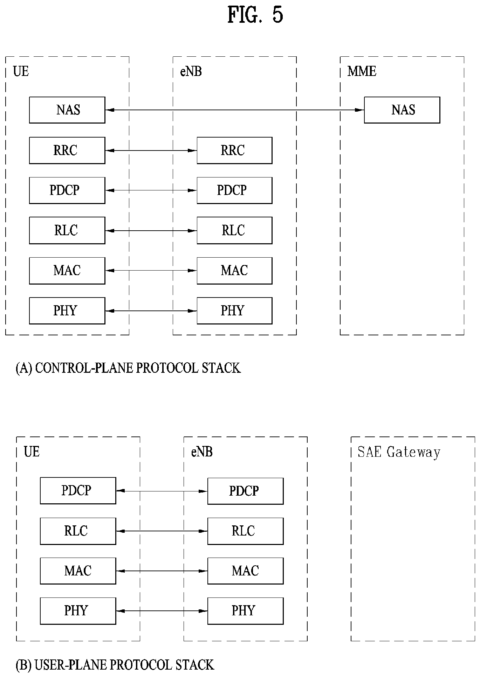

FIG. 5 illustrates control-plane and user-plane protocol stacks in a radio interface protocol architecture conforming to a 3GPP wireless access network standard between a UE and an evolved UMTS terrestrial radio access network (E-UTRAN). The control plane is a path in which the UE and the E-UTRAN transmit control messages to manage calls, and the user plane is a path in which data generated from an application layer, for example, voice data or Internet packet data is transmitted.

A physical (PHY) layer at layer 1 (L1) provides information transfer service to its higher layer, a medium access control (MAC) layer. The PHY layer is connected to the MAC layer via transport channels. The transport channels deliver data between the MAC layer and the PHY layer. Data is transmitted on physical channels between the PHY layers of a transmitter and a receiver. The physical channels use time and frequency as radio resources. Specifically, the physical channels are modulated in orthogonal frequency division multiple access (OFDMA) for downlink (DL) and in single carrier frequency division multiple access (SC-FDMA) for uplink (UL).

The MAC layer at layer 2 (L2) provides service to its higher layer, a radio link control (RLC) layer via logical channels. The RLC layer at L2 supports reliable data transmission. RLC functionality may be implemented in a function block of the MAC layer. A packet data convergence protocol (PDCP) layer at L2 performs header compression to reduce the amount of unnecessary control information and thus efficiently transmit Internet protocol (IP) packets such as IP version 4 (IPv4) or IP version 6 (IPv6) packets via an air interface having a narrow bandwidth.

A radio resource control (RRC) layer at the lowest part of layer 3 (or L3) is defined only on the control plane. The RRC layer controls logical channels, transport channels, and physical channels in relation to configuration, reconfiguration, and release of radio bearers. A radio bearer refers to a service provided at L2, for data transmission between the UE and the E-UTRAN. For this purpose, the RRC layers of the UE and the E-UTRAN exchange RRC messages with each other. If an RRC connection is established between the UE and the E-UTRAN, the UE is in RRC Connected mode and otherwise, the UE is in RRC Idle mode. A Non-Access Stratum (NAS) layer above the RRC layer performs functions including session management and mobility management.

DL transport channels used to deliver data from the E-UTRAN to UEs include a broadcast channel (BCH) carrying system information, a paging channel (PCH) carrying a paging message, and a shared channel (SCH) carrying user traffic or a control message. DL multicast traffic or control messages or DL broadcast traffic or control messages may be transmitted on a DL SCH or a separately defined DL multicast channel (MCH). UL transport channels used to deliver data from a UE to the E-UTRAN include a random access channel (RACH) carrying an initial control message and a UL SCH carrying user traffic or a control message. Logical channels that are defined above transport channels and mapped to the transport channels include a broadcast control channel (BCCH), a paging control channel (PCCH), a Common Control Channel (CCCH), a multicast control channel (MCCH), a multicast traffic channel (MTCH), etc.

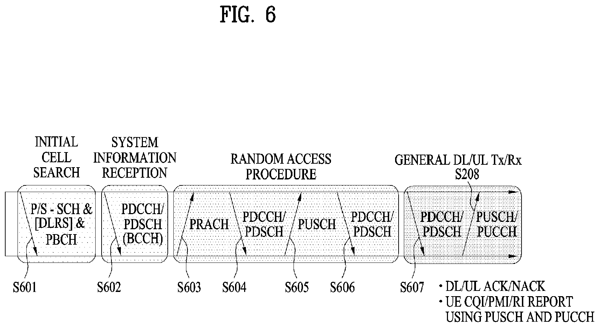

FIG. 6 illustrates physical channels and a general method for transmitting signals on the physical channels in the 3GPP system.

Referring to FIG. 6, when a UE is powered on or enters a new cell, the UE performs initial cell search (S601). The initial cell search involves acquisition of synchronization to an eNB. Specifically, the UE synchronizes its timing to the eNB and acquires a cell identifier (ID) and other information by receiving a primary synchronization channel (P-SCH) and a secondary synchronization channel (S-SCH) from the eNB. Then the UE may acquire information broadcast in the cell by receiving a physical broadcast channel (PBCH) from the eNB. During the initial cell search, the UE may monitor a DL channel state by receiving a downlink reference signal (DL RS).

After the initial cell search, the UE may acquire detailed system information by receiving a physical downlink control channel (PDCCH) and receiving a physical downlink shared channel (PDSCH) based on information included in the PDCCH (S602).

If the UE initially accesses the eNB or has no radio resources for signal transmission to the eNB, the UE may perform a random access procedure with the eNB (S203 to S206). In the random access procedure, the UE may transmit a predetermined sequence as a preamble on a physical random access channel (PRACH) (S603 and S605) and may receive a response message to the preamble on a PDCCH and a PDSCH associated with the PDCCH (S604 and S606). In the case of a contention-based RACH, the UE may additionally perform a contention resolution procedure.

After the above procedure, the UE may receive a PDCCH and/or a PDSCH from the eNB (S607) and transmit a physical uplink shared channel (PUSCH) and/or a physical uplink control channel (PUCCH) to the eNB (S208), which is a general DL and UL signal transmission procedure. Particularly, the UE receives downlink control information (DCI) on a PDCCH. Herein, the DCI includes control information such as resource allocation information for the UE. Different DCI formats are defined according to different usages of DCI.

Control information that the UE transmits to the eNB on the UL or receives from the eNB on the DL includes a DL/UL acknowledgment/negative acknowledgment (ACK/NACK) signal, a channel quality indicator (CQI), a precoding matrix index (PMI), a rank indicator (RI), etc. In the 3GPP LTE system, the UE may transmit control information such as a CQI, a PMI, an RI, etc. on a PUSCH and/or a PUCCH.

An NR system considers a method using an ultra-high frequency band, i.e., a millimeter frequency band of 6 GHz or above, to transmit data to multiple users using a wide frequency band while maintaining a high transmission rate. In 3GPP, this is used by the name of NR and, in the present disclosure, this will be hereinafter referred to as the NR system.

NR supports a plurality of numerologies (or subcarrier spacings (SCSs)) to support various 5G services. For example, when an SCS is 15 kHz, a wide area in traditional cellular bands is supported. When the SCS is 30 kHz/60 kHz, a dense-urban, lower latency, and wider carrier bandwidth are supported. When the SCS is 60 kHz or higher, bandwidth greater than 24.25 kHz is supported in order to overcome phase noise.

An NR frequency band may be defined as two types (FR1 and FR2) of frequency ranges. FR1 may refer to "sub-6 GHz range", and FR2 may refer to "above 6 GHz range" and may be referred to as a millimeter wave (mmW).

Table 1 below shows the definition of am NR frequency band.

[Table 1]

| Frequency Range Designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

## Discontinuous Reception (DRX) operation

While the UE performs the above-described/proposed procedures and/or methods, the UE may perform the DRX operation. The UE for which DRX is configured may reduce power consumption by discontinuously receiving a DL signal. DRX may be performed in a radio resource control (RRC)_IDLE state, an RRC_INACTIVE state, or an RRC_CONNECTED state. DRX in the RRC_IDLE state and the RRC_INACTIVE state is used to discontinuously receive a paging signal. Hereinafter, DRX performed in the RRC_CONNECTED state will be described (RRC_CONNECTED DRX).

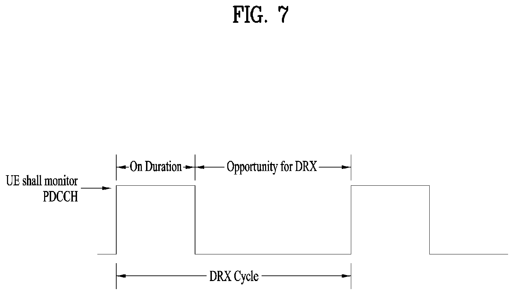

FIG. 7 illustrates a DRX cycle (RRC_CONNECTED state).

Referring to FIG. 7, the DRX cycle includes an On-duration and an opportunity for DRX. The DRX cycle defines a time interval at which the On-duration is cyclically repeated. The On-Duration indicates a time duration that the UE monitors to receive a PDCCH. If DRX is configured, the UE performs PDCCH monitoring during the On-duration. If the PDCCH is successfully detected during PDCCH monitoring, the UE operates an inactivity timer and maintains an awoken state. On the other hand, if there is no PDCCH which has been successfully detected during PDCCH monitoring, the UE enters a sleep state after the On-duration is ended. Therefore, when DRX is configured, the UE may discontinuously perform PDCCH monitoring/reception in the time domain upon performing the above-described/proposed procedures and/or methods. For example, when DRX is configured, a PDCCH reception occasion (e.g., a slot having a PDCCH search space) in the present disclosure may be discontinuously configured according to DRX configuration, when DRX is not configured, PDCCH monitoring/reception may be continuously performed in the time domain. For example, when DRX is not configured, the PDCCH reception occasion (e.g., the slot having the PDCCH search space) in the present disclosure may be continuously configured. Meanwhile, PDCCH monitoring may be restricted in a time duration configured as a measurement gap regardless of whether DRX is configured or not.

Table 2 illustrates a UE procedure related to DRX (RRC_CONNECTED state). Referring to Table 2, DRX configuration information is received through higher layer (e.g., RRC) signaling. Whether DRX is ON or OFF is controlled by a DRX command of a MAC layer. If DRX is configured, the UE may discontinuously perform PDCCH monitoring upon performing the above-described/proposed procedures and/or methods in the present disclosure, as illustrated in FIG. 7.

[Table 2]

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

Herein, MAC-CellGroupConfig includes configuration information needed to configure a MAC parameter for a cell group. MAC-CellGroupConfig may also include configuration information regarding DRX. For example, MAC-Cell-GroupConfig may include information for defining DRX as follows. - Value of drx-OnDurationTimer: defines the length of a starting duration of a DRX cycle.

- Value of drx-InactivityTimer: defines the length of a starting duration in which the UE is in an awoken state, after a PDCCH occasion in which a PDCCH indicating initial UL or DL data is detected.
- Value of drx-HARQ-RTT-TimerDL: defines the length of a maximum time duration until DL retransmission is received, after DL initial transmission is received.
- drx-LongCycleStartOffset: defines a time length and a starting time point of a DRX cycle
  drx-ShortCycle (optional): defines a time length of a short DRX cycle.

Herein, if any one of drx-OnDurationTimer, drx-InactivityTimer, drx-HARQ-RTT-TimerDL, and drx-HARQ-RTT-TimerDL is operating, the UE performs PDCCH monitoring in every PDCCH occasion while maintaining an awoken state.

**Positioning Reference Signal (PRS) in LTE System**

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

For such positioning, a positioning reference signal (PRS) may be used. The PRS is a reference signal used to estimate the position of the UE. For example, in the LTE system, the PRS may be transmitted only in a DL subframe configured for PRS transmission (hereinafter, "positioning subframe"). If both a multimedia broadcast single frequency network (MBSFN) subframe and a non-MBSFN subframe are configured as positioning subframes, OFDM symbols of the MBSFN subframe should have the same cyclic prefix (CP) as subframe #0. If only MBSFN subframes are configured as the positioning subframes within a cell, OFDM symbols configured for the PRS in the MBSFN subframes may have an extended CP.

The sequence of the PRS may be defined by Equation 1 below.

[Equation 1]

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,2N_{RB}^{\max,DL} - 1$$

where $n_s$ denotes a slot number in a radio frame and 1 denotes an OFDM symbol number in a slot. $N_{RB}^{max,DL}$ is represented as an integer multiple of $N_{SC}^{RB}$ as the largest value among DL bandwidth configurations. $N_{SC}^{RB}$ denotes the size of a resource block (RB) in the frequency domain, for example, 12 subcarriers.

c(i) denotes a pseudo-random sequence and may be initialized by Equation 2 below.

[Equation 2]

$$c_{\text{init}} = 2^{28} \cdot \left\lfloor N_{ID}^{PRS}/512 \right\rfloor + 2^{10} \cdot \left(7 \cdot (n_s + 1) + l + 1\right) \cdot \left(2 \cdot \left(N_{ID}^{PRS} \bmod 512\right) + 1\right) + 2 \cdot \left(N_{ID}^{PRS} \bmod 512\right) + N_{CP}$$

Unless additionally configured by higher layers, $N_{ID}^{PRS}$ is equal to $N_{ID}^{cell}$, and $N_{CP}$ is 1 for a normal CP and 0 for an extended CP.

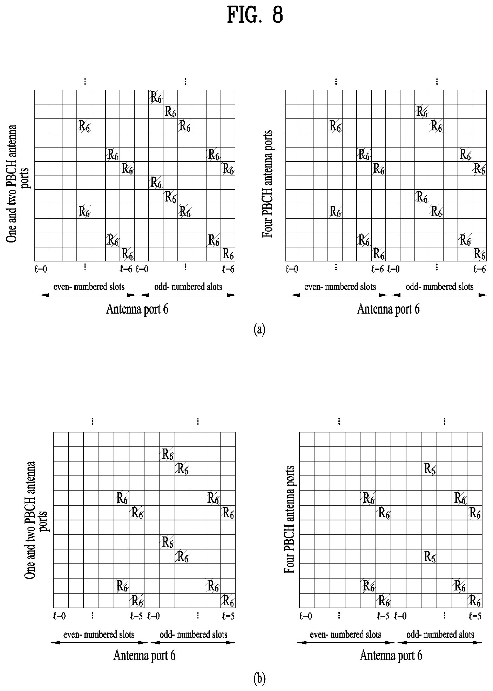

FIG. 8 illustrates an exemplary pattern to which a PRS is mapped in a subframe. As illustrated in FIG. 8, the PRS may be transmitted through an antenna port 6. FIG. 8(a) illustrates mapping of the PRS in the normal CP and FIG. 8(b) illustrates mapping of the PRS in the extended CP.

The PRS may be transmitted in consecutive subframes grouped for position estimation. The subframes grouped for position estimation are referred to as a positioning occasion. The positioning occasion may consist of 1, 2, 4 or 6 subframe. The positioning occasion may occur periodically with a periodicity of 160, 320, 640 or 1280 subframes. A cell-specific subframe offset value may be defined to indicate the starting subframe of PRS transmission. The offset value and the periodicity of the positioning occasion for PRS transmission may be derived from a PRS configuration index as listed in Table 3 below.

[Table 3]

| PRS configuration Index ($I_{PRS}$) | PRS periodicity (subframes) | PRS subframe offset (subframes) |
|---|---|---|
| 0 -159 | 160 | $I_{PRS}$ |
| 160 - 479 | 320 | $I_{PRS}$-160 |
| 480 - 1119 | 640 | $I_{PRS}$-480 |
| 1120 - 2399 | 1280 | $I_{PRS}$-1120 |

(continued)

| PRS configuration Index ($I_{PRS}$) | PRS periodicity (subframes) | PRS subframe offset (subframes) |
|---|---|---|
| 2400 - 2404 | 5 | $I_{PRS}$-2400 |
| 2405 - 2414 | 10 | $I_{PRS}$-2405 |
| 2415 - 2434 | 20 | $I_{PRS}$-2415 |
| 2435 - 2474 | 40 | $I_{PRS}$-2435 |
| 2475 - 2554 | 80 | $I_{PRS}$-2475 |
| 2555 - 4095 | Reserved | |

A PRS included in each positioning occasion is transmitted with constant power. A PRS in a certain positioning occasion may be transmitted with zero power, which is referred to as PRS muting. For example, when a PRS transmitted by a serving cell is muted, the UE may easily detect a PRS of a neighbor cell. The PRS muting configuration of a cell may be defined by a periodic muting sequence consisting of 2, 4, 8 or 16 positioning occasions. That is, the periodic muting sequence may include 2, 4, 8, or 16 bits according to a positioning occasion corresponding to the PRS muting configuration and each bit may have a value "0" or "1". For example, PRS muting may be performed in a positioning occasion with a bit value of "0". The positioning subframe is designed as a low-interference subframe so that no data is transmitted in the positioning subframe. Therefore, the PRS is not subjected to interference due to data transmission although the PRS may interfere with PRSs of other cells.

### UE Positioning Architecture in LTE system

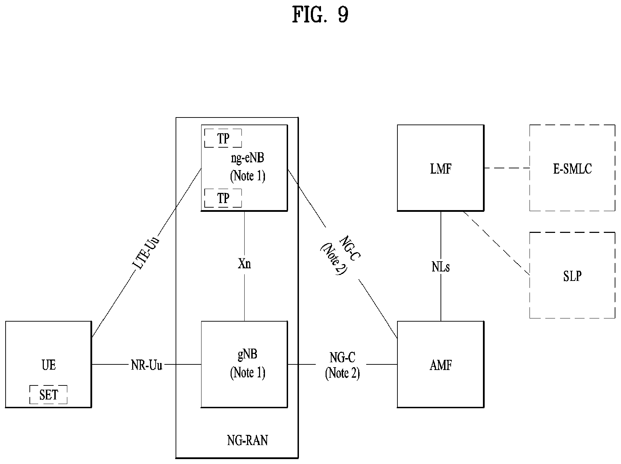

FIG. 9 illustrates architecture of a 5G system applicable to positioning of a UE connected to an NG-RAN or an E-UTRAN.

Referring to FIG. 9, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several transmission points (TPs), such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support observed time difference of arrival (OTDOA), which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

**Operation for UE Positioning**

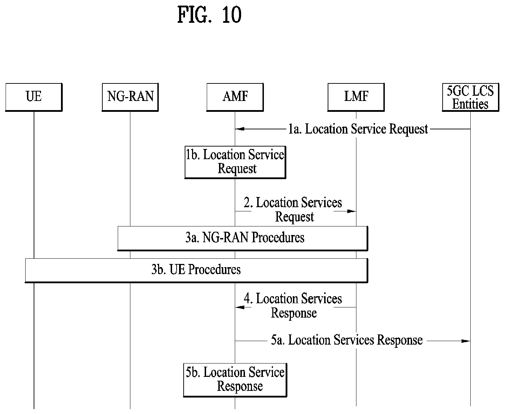

FIG. 10 illustrates an implementation example of a network for UE positioning. When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 10. In other words, in FIG. 10, it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 10. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 10 has been initiated by step 1a, the AMF may transfer the location service response to a 5GC entity such as a GMLC. If the procedure of FIG. 10 has been initiated by step 1b, the AMF may use the location service response in order to provide a location service related to an emergency call.

**Protocol for Location Measurement**

(1) LTE Positioning Protocol (LPP)

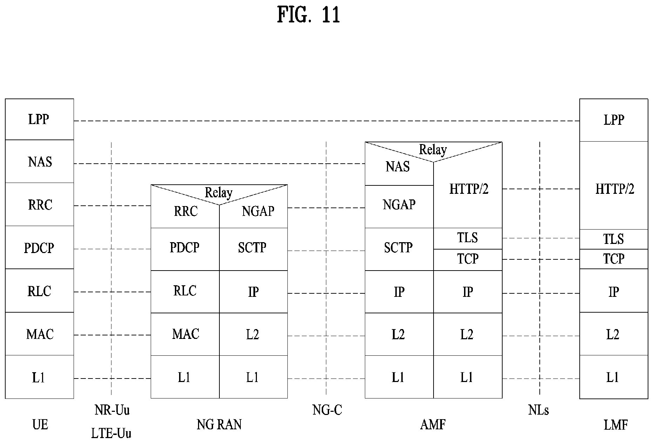

FIG. 11 illustrates an exemplary protocol layer used to support LPP message transfer between an LMF and a UE. An LPP protocol data unit (PDU) may be carried in a NAS PDU between an AMF and the UE. Referring to FIG. 11, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

(2) NR Positioning Protocol A (NRPPa)

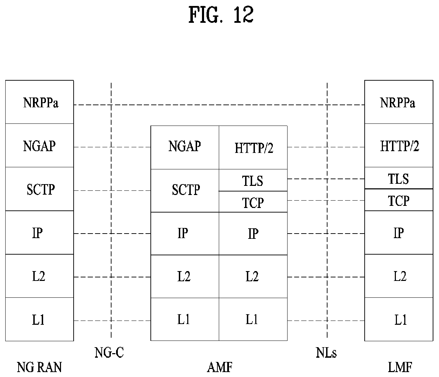

FIG. 12 illustrates an exemplary protocol layer used to support NRPPa PDU transfer between an LMF and an NG-RAN node. NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

**Positioning Measurement Method**

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

(1) Observed Time Difference Of Arrival (OTDOA)

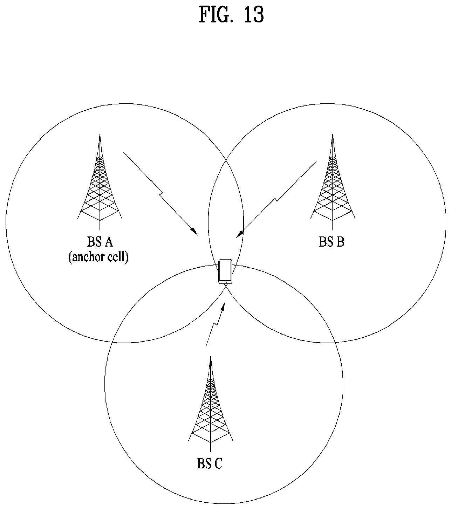

FIG. 13 is a view illustrating an OTDOA positioning method. The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 3 below.

[Equation 3]

$$RSTDi,1 = \frac{\sqrt{(x_t - x_i)^2 + (y_t - y_i)^2}}{c} - \frac{\sqrt{(x_t - x_1)^2 + (y_t - y_1)^2}}{c} + (Ti - T1) + (ni - n1)$$

where c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

(2) Enhanced Cell ID (E-CID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (RX)-transmission (TX) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB RX-TX time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB RX-TX time difference}) + (\text{UE E-UTRA RX-TX time difference})$$

$$T_{ADV} \text{ Type } 2 = \text{ng-eNB RX-TX time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

(3) Uplink Time Difference of Arrival (UTDOA)

UTDOA is to determine the position of the UE by estimating the arrival time of an SRS. When an estimated SRS arrival time is calculated, a serving cell is used as a reference cell and the position of the UE may be estimated by the arrival time difference with another cell (or an eNB/TP). To implement UTDOA, an E-SMLC may indicate the serving cell of a target UE in order to indicate SRS transmission to the target UE. The E-SMLC may provide configurations such as periodic/non-periodic SRS, bandwidth, and frequency/group/sequence hopping.

**SSB Related Behavior**

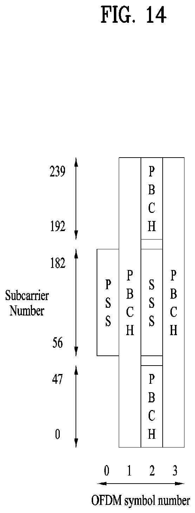

FIG. 14 illustrates an SSB structure. The UE may perform cell search, system information acquisition, beam alignment for initial access, DL measurement, etc. based on the SSB. The SSB and synchronization signal/physical broadcast channel (SS/PBCH) block are interchangeably used.

Referring to FIG. 14, an SSB includes a PSS, an SSS, and a PBCH. The SSB is configured over four consecutive OFDM symbols, and the PSS, PBCH, SSS/PBCH, and PBCH are transmitted on the respective OFDM symbols. The PSS and SSS may each consist of 1 OFDM symbol and 127 subcarriers, and the PBCH may consist of 3 OFDM symbols and 576 subcarriers. Polar coding and quadrature phase shift keying (QPSK) are applied to the PBCH. The PBCH may have a data RE and a demodulation reference signal (DMRS) RE for each OFDM symbol. There may be three DMRS REs for each RB, and there may be three data REs between DMRS REs.

The cell search refers to a procedure in which the UE acquires time/frequency synchronization of a cell and detects a cell ID (e.g., physical layer cell ID (PCID)) of the cell. The PSS may be used in detecting a cell ID within a cell ID group, and the SSS may be used in detecting a cell ID group. The PBCH may be used in detecting an SSB (time) index and a half-frame.

The cell search procedure of the UE may be summarized as shown in Table 4 below.

[Table 4]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF)<br>* Remaining Minimum System Information (RMSI)<br>Control resource set (CORESET)/Search space configuration |
| 5th Step | PDCCH and PDSCH | * Cell access information<br>* RACH configuration |

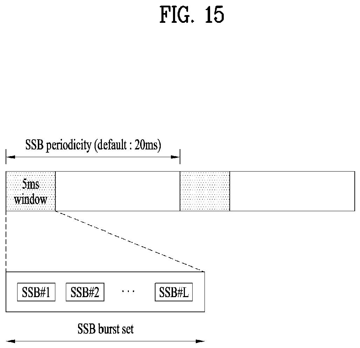

There may be 336 cell ID groups, and each cell ID group may have three cell IDs. There may be 1008 cell IDs in total. Information about a cell ID group to which a cell ID of a cell belongs may be provided/acquired through the SSS of the cell, and information about the cell ID among 336 cells in the cell ID may be provided/acquired through the PSS. FIG. 15 illustrates SSB transmission. Referring to FIG. 15, the SSB is periodically transmitted in accordance with the SSB periodicity. The basic SSB periodicity assumed by the UE in the initial cell search is defined as 20 ms. After cell access, the SSB periodicity may be set to one of {5ms, 10ms, 20ms, 40ms, 80ms, 160ms} by the network (e.g., the BS). A SSB burst set may be configured at the beginning of the SSB periodicity. The SSB burst set may be configured with a 5 ms time window (i.e., half-frame), and the SSB may be repeatedly transmitted up to L times within the SS burst set. The maximum number of transmissions of the SSB, L, may be given according to the frequency band of the carrier wave as follows. One slot includes up to two SSBs. - For frequency range up to 3 GHz, L = 4

- For frequency range from 3 GHz to 6 GHz, L = 8
- For frequency range from 6 GHz to 52.6 GHz, L = 64

The time position of an SSB candidate in the SS burst set may be defined according to the SCS as follows. The time position of the SSB candidate is indexed from 0 to L-1 in temporal order within the SSB burst set (i.e., half-frame) (SSB index).

- Case A - 15 kHz SCS: The index of the start symbol of a candidate SSB is given as {2, 8} + 14*n. When the carrier frequency is lower than or equal to 3 GHz, n = 0, 1. When the carrier frequency is 3 GHz to 6 GHz, n=0, 1, 2, 3.
- Case B - 30 kHz SCS: The index of the start symbol of a candidate SSB is given as {4, 8, 16, 20} + 28*n. When the carrier frequency is lower than or equal to 3 GHz, n = 0. When the carrier frequency is 3 GHz to 6 GHz, n=0, 1.
- Case C - 30 kHz SCS: The index of the start symbol of a candidate SSB is given as {2, 8} + 14*n. When the carrier frequency is lower than or equal to 3 GHz, n = 0. When the carrier frequency is 3 GHz to 6 GHz, n=0, 1, 2, 3.
- Case D - 120 kHz SCS: The index of the start symbol of a candidate SSB is given as {4, 8, 16, 20} + 28*n. When the carrier frequency is higher than 6 GHz, n=0, 1, 2, 3, 5, 6, 7, 8, 10, 11, 12, 13, 15, 16, 17, 18.
- Case E - 240 kHz SCS: The index of the start symbol of a candidate SSB is given as {8, 12, 16, 20, 32, 36, 40, 44} + 56*n. When the carrier frequency is higher than 6 GHz, n=0, 1, 2, 3, 5, 6, 7, 8.

**CSI Related Behavior**

In a new radio (NR) system, a CSI-RS is used for time and/or frequency tracking, CSI computation, RSRP calculation, and mobility. Here, CSI computation is related to CSI acquisition, and RSRP computation is related to beam management (BM).

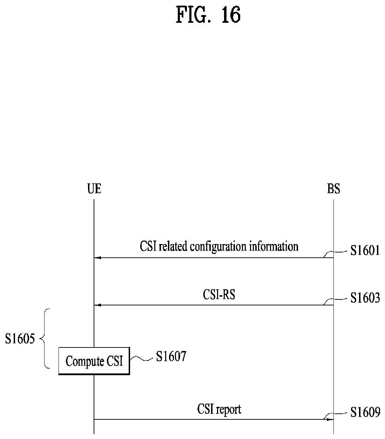

FIG. 16 is a flowchart illustrating an exemplary CSI related procedure.

- To perform one of the above purposes of the CSI-RS, the UE receives configuration information related to CSI from the BS through RRC signaling (S1601).

The CSI related configuration information may include at least one of CSI-interference management (IM) resource related information, CSI measurement configuration related information, CSI resource configuration related information, CSI-RS resource related information, or CSI report configuration related information.

i) The CSI-IM resource related information may include CSI-IM resource information, CSI-IM resource set information, etc. A CSI-IM resource set is identified by a CSI-IM resource set identifier (ID), and one resource set includes at least one CSI-IM resource. Each CSI-IM resource is identified by a CSI-IM resource ID.

ii) The CSI resource configuration related information may be expressed as a CSI-ResourceConfig information element (IE). The CSI resource configuration related information defines a group including at least one of a non-zero power (NZP) CSI-RS resource set, a CSI-IM resource set, or a CSI-SSB resource set. That is, the CSI resource configuration related information includes a CSI-RS resource set list. The CSI-RS resource set list may include at least one of an NZP CSI-RS resource set list, a CSI-IM resource set list, or a CSI-SSB resource set list. The CSI-RS resource set is identified by a CSI-RS resource set ID, and one resource set includes at least one CSI-RS resource. Each CSI-RS resource is identified by a CSI-RS resource ID.

RRC parameters (e.g., a BM related "repetition" parameter and a tracking related "trs-Info" parameter) indicating usage of a CSI-RS for each NZP CSI-RS resource set ,au be configured.

iii) The CSI report configuration related information includes a report configuration type parameter (reportConfigType) indicative of a time domain behavior and a report quantity parameter (reportQuantity) indicative of a CSI related quantity to be reported. The time domain behavior may be periodic, aperiodic, or semi-persistent.

- The UE measures CSI based on the CSI related configuration information (S1603). Measuring the CSI may include (1) receiving a CSI-RS by the UE (S1605) and (2) computing the CSI based on the received CSI-RS (S1607). For the CSI-RS, RE mapping of CSI-RS resources is configured in time and frequency domains by an RRC parameter CSI-RS-ResourceMapping.
- The UE reports the measured CSI to the BS (S 1609).

1. CSI Measurement

The NR system supports more flexible and dynamic CSI measurement and reporting. The CSI measurement may include receiving a CSI-RS, and acquiring CSI by computing the received CSI-RS.

As time domain behaviors of CSI measurement and reporting, channel measurement (CM) and interference measurement (IM) are supported.

A CSI-IM-based interference measurement resource (IMR) of NR has a design similar to CSI-IM of LTE and is configured independent of ZP CSI-RS resources for PDSCH rate matching.

At each port of a configured NZP CSI-RS-based IMR, the BS transmits an NZP CSI-RS to the UE.

If there is no PMI or RI feedback for a channel, a plurality of resources is configured in a set and the BS or network indicates, through DCI, a subset of NZP CSI-RS resources for CM/IM.

Resource setting and resource setting configuration will be described in more detail.

### 1. 1. Resource Setting

Each CSI resource setting "CSI-ResourceConfig" includes configuration of S($\geq$1) CSI resource sets (which are given by RRC parameter csi-RS-ResourceSetList). A CSI resource setting corresponds to CSI-RS-resourcesetlist. Here, S represents the number of configured CSI-RS resource sets. Configuration of S($\geq$1) CSI resource sets includes each CSI resource set including CSI-RS resources (composed of NZP CSI-RS or CSI-IM), and an SS/PBCH block (SSB) resource used for RSRP computation.

Each CSI resource setting is positioned at a DL bandwidth part (BWP) identified by RRC parameter bwp-id. All CSI resource settings linked to a CSI reporting setting have the same DL BWP.

In a CSI resource setting included in a CSI-ResourceConfig IE, a time domain behavior of a CSI-RS resource may be indicated by RRC parameter resourceType and may be configured to be aperiodic, periodic, or semi-persistent.

One or more CSI resource settings for CM and IM are configured through RRC signaling. A channel measurement resource (CMR) may be an NZP CSI-RS for CSI acquisition, and an interference measurement resource (IMR) may be an NZP CSI-RS for CSI-IM and for IM. Here, CSI-IM (or a ZP CSI-RS for IM) is mainly used for inter-cell interference measurement. An NZP CSI-RS for IM is mainly used for intra-cell interference measurement from multiple users.

The UE may assume that CSI-RS resource(s) for CM and CSI-IM/NZP CSI-RS resource(s) for IM configured for one CSI reporting are "QCL-TypeD" for each resource.

### 1.2. Resource Setting Configuration

A resource setting may represent a resource set list.

- When one resource setting is configured, a resource setting (given by RRC parameter resourcesForChannelMeasurement) is about channel measurement for RSRP computation.
- When two resource settings are configured, the first resource setting (given by RRC parameter resourcesForChannelMeasurement) is for channel measurement and the second resource setting (given by csi-IM-ResourcesForInterference or nzp-CSI-RS-ResourcesForInterference) is for CSI-IM or for interference measurement performed on an NZP CSI-RS.
- When three resource settings are configured, the first resource setting (given by resourcesForChannelMeasurement) is for channel measurement, the second resource setting (given by csi-IM-ResourcesForInterference) is for CSI-IM based interference measurement, and the third resource setting (given by nzp-CSI-RS-ResourcesForInterference) is for NZP CSI-RS based interference measurement.
- When one resource setting (given by resourcesForChannelMeasurement) is configured, the resource setting is about channel measurement for RSRP computation.
- When two resource settings are configured, the first resource setting (given by resourcesForChannelMeasurement) is for channel measurement, and the second resource setting (given by RRC parameter csi-IM-ResourcesForInterference) is used for interference measurement performed on CSI-IM.

### 1.3. CSI Computation

If interference measurement is performed on CSI-IM, each CSI-RS resource for channel measurement is associated with a CSI-RS resource in order of CSI-RS resources and CSI-IM resources in a corresponding resource set. The number of CSI-RS resources for channel measurement is the same as the number of CSI-IM resources.

For CSI measurement, the UE assumes the following.

- Each NZP CSI-RS port configured for interference measurement corresponds to an interference transmission layer.
- Every interference transmission layer of NZP CSI-RS ports for interference measurement considers an energy per resource element (EPRE) ratio.

- Different interference signals are assumed on RE(s) of an NZP CSI-RS resource for channel measurement, an NZP CSI-RS resource for interference measurement, or a CSI-IM resource for interference measurement.

## 2. CSI Reporting

For CSI reporting, time and frequency resources available for the UE are controlled by the BS.

Regarding a CQI, PMI, CSI-RS resource indicator (CRI), SS/PBCH block resource indicator (SSBRI), layer indicator (LI), RI, or L1-RSRP, the UE receives RRC signaling including N($\geq$1) CSI-ReportConfig reporting settings, M($\geq$1) CSI-ResourceConfig resource settings, and a list of one or two trigger states (provided by aperiodicTriggerStateList and semiPersistentOnPUSCH-TriggerStateList). In aperiodicTriggerStateList, each trigger state includes a channel and optionally a list of associated CSI-ReportConfigs indicative of resource set IDs for interference. In semiPersistentOn-PUSCH-TriggerStateList, each trigger state includes one associated CSI-ReportConfig.

That is, for each CSI-RS resource setting, the UE transmits CSI reporting indicated by CSI-ReportConfigs associated with the CSI-RS resource setting to the BS. For example, the UE may report at least one of the CQI, PMI, CRI, SSBRI, LI, RI, or RSRP as indicated by CSI-ReportConfigs associated with the CSI resource setting. However, if CSI-ReportConfigs associated with the CSI resource setting indicates "none", the UE may skip reporting of the CSI or RSRP associated with the CSI resource setting. The CSI resource setting may include a resource for an SS/PBCH block.

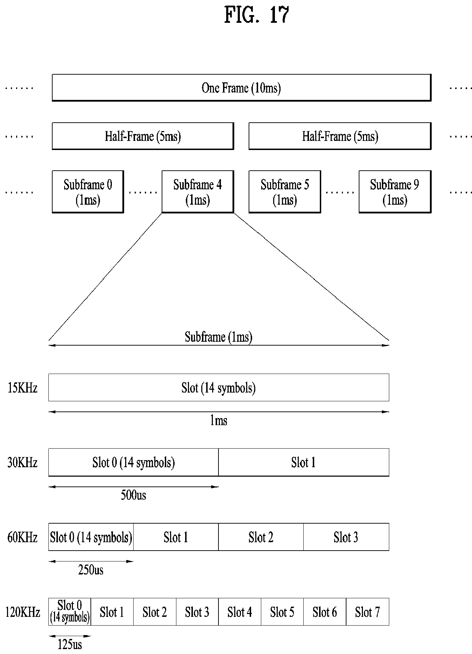

FIG. 17 illustrates a structure of a radio frame used in NR.

In NR, UL and DL transmissions are configured in frames. The radio frame has a length of 10 ms and is defined as two 5 ms half-frames (HF). The half-frame is defined as five 1 ms subframes (SF). A subframe is divided into one or more slots, and the number of slots in a subframe depends on subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Here, the symbols may include OFDM symbols (or CP-OFDM symbols) and SC-FDMA symbols (or DFT-s-OFDM symbols).

Table 5 illustrates that the number of symbols per slot, the number of slots per frame, and the number of slots per subframe vary according to the SCS when the normal CP is used.

[Table 5]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 6 illustrates that the number of symbols per slot, the number of slots per frame, and the number of slots per subframe vary according to the SCS when the extended CP is used.

[Table 6]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

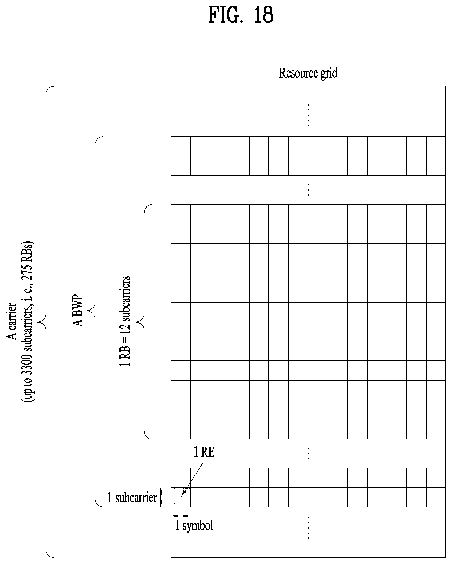

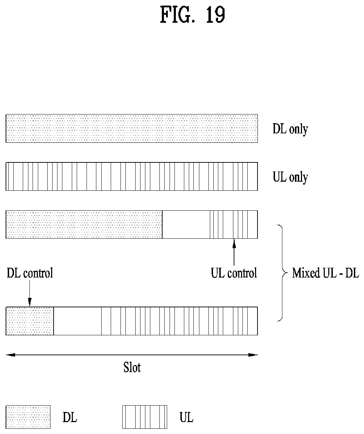

In the NR system, the OFDM(A) numerology (e.g., SCS, CP length, etc.) may be configured differently among a plurality of cells merged for one UE. Thus, the (absolute time) duration of a time resource (e.g., SF, slot or TTI) (referred to as a time unit (TU) for simplicity) composed of the same number of symbols may be set differently among the merged cells. FIG. 18 illustrates a slot structure of an NR frame. A slot includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) is defined as a plurality of consecutive (P)RBs in the frequency domain and may correspond to one numerology (e.g., SCS, CP length, etc.). A carrier may include up to N (e.g., five) BWPs. Data communication is performed through an activated BWP, and only one BWP may be activated for one UE. In the resource grid, each element is referred to as a resource element (RE), and one complex symbol may be mapped thereto. FIG. 19 illustrates a structure of a self-contained slot. In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

1. DL only configuration
2. UL only configuration
3. Mixed UL-DL configuration
-

DL region + Guard period (GP) + UL control region

-

DL control region + GP + UL region

\* DL region: (i) DL data region, (ii) DL control region + DL data region
\* UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. The GP provides a time gap in the process of the UE switching from the transmission mode to the reception mode or from the reception mode to the transmission mode. Some symbols at the time of switching from DL to UL within a subframe may be configured as the GP.

Meanwhile, the location server mentioned in the present disclosure may be a specific BS responsible for a wireless positioning operation. Alternatively, the location server may be a server/subject responsible for the positioning operation as an entity independent of the BS. Since it is highly probable that a new RAT (NR) system operates as a narrow-beam-based system, the BS/LMF/location server may instruct/configure the UE to report measurement performed by the UE in consideration of a transmission/reception (TX/RX) beam sweeping operation of a transceiver.

**Reporting Behavior for RAT-Dependent Positioning**

A PRS block may be defined as a basic unit of PRS transmission and reception for measurement and/or reporting considering the TX beam sweeping of multiple TPs/BSs for a single RX beam. A PRS occasion may be defined as a repeated structure of the PRS block. The PRS block mentioned in the present disclosure may correspond to a specific TX beam of each TP/BS. As described above, the PRS block may be configured/indicated/defined by reflecting multi-beam sweeping of the TP/BS. The LMF/location server may configure/indicate the PRS block for/to the UE. The PRS block may be a basic unit of PRS transmission and reception and a basic unit of a measurement acquisition and/or measurement reporting operation for the PRS by the UE.

To design the PRB block including a plurality of PRS resource sets, the following elements may be considered.

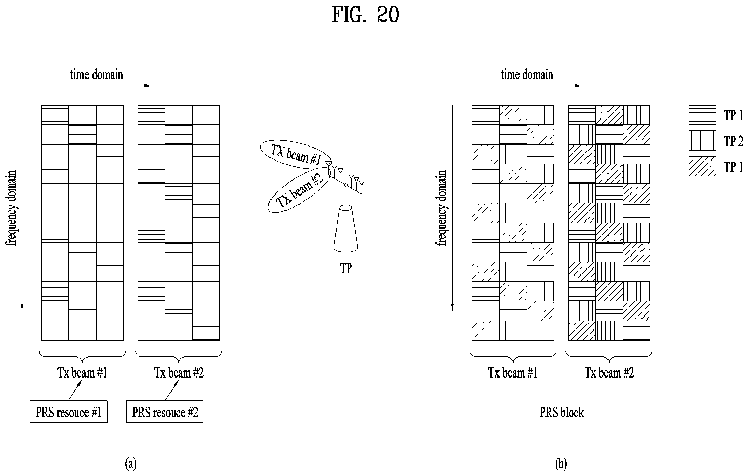

- Referring to FIG. 20(a), in terms of a single TP/BS, all PRS resources within a PRS resource set may be transmitted within one PRS block. Since one PRS resource corresponds to one TX beam, the PRS may be transmitted through multiple TX beams within one PRS block.

- Referring to FIG. 20(b), in consideration of all TPs/BSs, frequency RSs and time REs within a RPS block may be fully occupied by the PRS resource set.

For example, when three TPs/BSs with a TX beam sweeping periodicity of 2 are considered, three PRS resource sets are present and each of the three PRS resource sets may include two PRS resources corresponding respectively to two TX beams of each TP/BS.

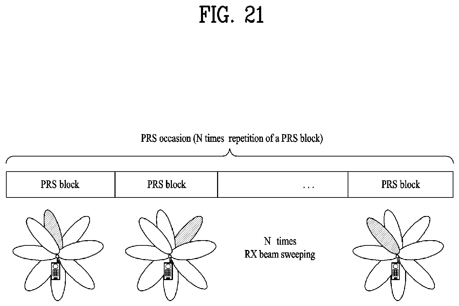

Referring to FIG. 21, a PRS occasion has a structure in which a PRS block is repeated N times. The network/LMF may repeatedly transmit the PRS block and the UE may receive the PRS block or perform RX beam sweeping according to capability in order to improve hearability.

Time resource and beam sweeping base

A BS/LMF/location server may be linked/connected/related to a PRS transmitted in a specific time resource, time interval, and/or time unit to instruct/configure the UE to perform or report at least one of ToA/RSTD/TDOA/AoA or ToA/RSTD/TDOA/AoA + RSSI/RSRP measurement. The RSSI/RSRP measurement may be calculated based on an average of measured received signal strength values. The BS/LMF/location server may instruct the UE to report the index of a PRS resource corresponding to a measurement value reported by the UE.

The BS/LMF/location server configures/ instructs/commands the UE to report measurement information, such as AoA, ToA, and/or RSTD, which is obtained by the UE by receiving the PRS, in units of a PRS block/PRS occasion/PRS occasion group. The BS/LMF/location server configures/instructs the UE to acquire and report the measurement information, such as AoA, ToA, and/or RSTD, in units of a specific PRS block/PRS occasion/PRS occasion group.

This operation may be important in association with a time unit in which a TX/RX beam sweeping operation of the TP/BS and/or the UE is performed.

For example, the BS/LMF/location server may configure/indicate, for/to the UE, a TX/RX beam sweeping operation for transmitting and receiving the PRS as follows.

1) One PRS block may be designed based on PRS transmission while one or more TPs/BSs sweep a TX beam. For example, the PRS block may be configured in consideration of a TX beam sweeping period and/or the total number of TX beam sweeping operations needed by each TP/BS within one PRS block.

2) One PRS block may be designed/configured such that one or more TPs/BSs repeatedly transmit the PRS through the same TX beam. The PRS block may cause the UE to acquire signal-to-noise ratio (SNR) gain while the UE repeatedly receives the PRS. Alternatively, when the UE repeatedly receives the same PRS, the UE may perform measurement based on an RX beam while sweeping the RX beam.

3) One PRS block may be configured//defined by simply grouping a plurality of OFDM symbols without considering RX beam sweeping of the UE and/or TX beam sweeping of the TP/BS.

4) A PRS occasion may be configured as a larger unit than the PRS block, and multiple PRS blocks may constitute one PRS occasion. For example, one PRS occasion may be configured such that the PRS may be transmitted to the UE $N(\geq1)$ times through each TX beam in consideration of a beam sweeping period during which each TP/BS sweeps the TX beam $M(\geq=1)$ times. For example, the PRS may be transmitted and received within one PRS occasion in consideration of both a TX beam sweeping period of the BS and an RX beam sweeping period of the UE. Here, M indicating the number of beam sweeping operations of each TP/BS may differ according to each TP/BS. One or more PRS occasions may be defined/configured/indicated as one PRS occasion group.

5) The RX beam sweeping operation of the UE receiving the PRS may be performed in the following unit.

- A TX beam may be fixed and an RX beam may be swept in units of one or more PRS resources.
- The RX beam may be swept in units of a PRS block. In this case, the TX beam may be swept within a PRS block.
- The RX beam may be swept in units of a PRS occasion. In this case, the TX beam may be swept within a PRS occasion.
- When the same PRS is transmitted multiple times using the same DL TX beam, the UE may acquire sufficient repetition and SNR gain by receiving the PRS transmitted multiple times through the same DL TX beam using one fixed RX beam and sweep a PRS RX beam.
- The RX beam may be swept in units of a PRS occasion group.
- The RX beam may not be swept. In other words, the UE may repeatedly acquire a measurement value using an indicated RX beam and may report the measurement value.

For example, when one PRS block is configured in consideration of a TX beam sweeping period including $M(>1)$ TX beams as illustrated in FIG. 21, the UE may be instructed/configured to receive, through the same RX beam, a PRS transmitted through $M(>1)$ TX beams and then to report $L(>0)$ best AoA/ToA/RSTD/TDOA/RSRP measurement values. Here, the L best measurement values may mean the smallest ToA/RSTD/TDOA value and/or the largest RSRP/RSSI value.

To acquire or report measurement information, the BS/LMF/location server may instruct or configure the UE to use a specific RX beam. The BS/LMF/location server may also instruct/configure the UE to report ToA/RSTD/TDOA in association with one PRS occasion.

Here, within one PRS occasion, the TP/BS may transmit the PRS through all available TX beams and the UE may receive, through all available RX beams, the PRS transmitted through each TX beam. Alternatively, within one PRS occasion, the PRS may be transmitted through all available TX beams and may be received through all available RX beams.

Instructing measurement reporting in association with the PRS occasion group may mean that a TX/RX beam sweeping period for transmitting and receiving the PRS is repeated multiple times. In other words, instructing measurement reporting in association with the PRS occasion group indicates that transmission of the PRS using a specific TX beam and reception of the PRS using a specific RX beam are repeated multiple times, so that a more accurate measurement value may be reported through repetition gain.

When a CSI-RS resource set is configured in association with a TX/RX beam sweeping operation, "repetition" defined by a higher layer parameter may be set to "ON" or "OFF" so that the UE may recognize/assume whether a CSI-RS resource included in a specific CSI-RS resource set is transmitted through the same TX beam.

Similarly, a PRS resource may be configured. For example, a configuration parameter of a unit of grouping a PRS resource set/group or multiple PRS resource sets/groups may be introduced so that whether TX beam sweeping is performed according to a time/space/frequency resource of a specific TP/BS may be configured/indicated by "ON"/"OFF". For example, the configuration parameter may be set to "OFF" so that the UE may recognize that PRS resources included in a specific PRS resource set/group are transmitted through the same TX beam. Here, the meaning of "the PRS resources are transmitted through the same TX beam" is that PRS transmission is performed without performing TX beam sweeping over time. That is, this means that the PRS is transmitted through one TX beam.

When configuring the beam sweeping operation of the PRS, the following configuration different from the configuration of a CSI-RS may be additionally considered.

1) Whether to perform TX beam sweeping according to a time/frequency resource of a TX beam through which a specific TP/BS transmits the PRS may be configured or indicated in units of a PRS block, a PRS occasion, and/or a PRS occasion group in which the PRS is transmitted.

2) Unlike the CSI-RS, for the PRS, the BS/LMF/location server may indicate, to the UE, whether TX beam sweeping is performed and also instruct or configure the UE to perform a measurement reporting operation in connection/linkage/association with a specific time resource (e.g., a PRS block/PRS occasion/PRS occasion group). The BS/LMF/location server may also configure/instruct the UE to perform measurement acquisition and/or measurement reporting for a specific TX beam of a specific TP/BS and a specific RX beam of the UE. Additionally, this operation of the UE may be instructed/configured to be performed only in a specific PRS block, a PRS occasion, and/or a PRS occasion group.

3) When a CSI-RS, an SRS, an SS/PBCH block etc., other than a dedicated PRS, are used for positioning, the BS/LMF/location server may indicate, to the UE, whether TX beam sweeping is performed and also instruct/configure the UE to perform a measurement reporting operation in connection/linkage/association with a specific time resource (e.g., a PRS block, consecutive slots, a specific time interval, or a specific period).

For the above measurement of the UE, all measurement information such as RSTD, AoA, AoD, ToA, TDOA, RSRP, RSSI, etc. capable of being used for UE positioning may be included. This may be related to a time resource unit in which the beam sweeping operations of the TP/BS and the UE are performed. Importance of reporting configuration/indication associated with TX/RX beam sweeping may increase according to the structure of a dedicated RS defined/configured for positioning.

In addition, the PRS may be configured differently from an SS/PBCH block that defines a specific RS resource/unit transmitted through one TX beam as one block. For example, if the PRS is defined/configured in units of an RS resource and/or RS resource set similarly to the CSI-RS, the BS/LMF/location server may configure/indicate to the UE whether TX beam sweeping is performed, together with a PRS configuration, so that the UE may recognize whether a TX beam of a specific TP/BS for each PRS resource and/or PRS resource set is swept when the TP/BS transmits the PRS. In addition, a reporting unit for acquired measurement may be indicated/configured to/for the UE.

PRS frequency resource base

The BS/LMF/location server may configure/instruct the UE to perform a specific reporting operation in association/linkage with a PRS transmitted on a specific frequency resource.

For example, the BS/LMF/location server may configure/indicate different measurement reporting according to a PRS frequency band in which the PRS is transmitted to the UE. In addition, the BS/LMF/location server may indicate/configure a specific beam to be used by the UE according to each PRS frequency band.

To measure the position of the UE using both a time-based positioning scheme, such as OTDOA, and an angle-based positioning scheme, the UE may be instructed to perform ToA/RSTD/TDOA reporting for a specific PRS frequency resource and to perform measurement reporting related to angle, such as AoA, for another specific PRS frequency resource.

Although the BS transmits the PRS in K(>>1) RBs, the BS may instruct the UE to report ToA/RSTD/TDOA/AoA only for k(<<K) RBs among RBs in which the PRS is transmitted to the UE according to UE capability.

Instructing/configuring the UE to perform measurement reporting in linkage/association with this frequency resource may be performed together with instructing/configuring the UE to perform measurement reporting based on the above-described time resource and beam sweeping. In the above description, measurement may mean all measurement information capable of being used for UE positioning, including ToA/RSTD/TDOA/AoA and RSSI/RSRP.

PRS space resource base

For UE positioning, the UE may receive RSs such as PRSs transmitted by a plurality of cells/BSs/TRPs and perform measurement and reporting of ToA/RSTD/AoA.

Considering that different PRS resource sets are transmitted by different TRPs/BSs/cells, as a default operation for RSTD reporting, the UE may select a PRS resource with a minimum ToA from each PRS resource set and report RSTD between PRS resources with minimum ToAs in different PRS resource sets to the LMF/location server. This operation of the UE may be indicated/configured by the BS/LMF/location server.

The BS/LMF/location server may indicate/configure, to/for the UE, a specific RX panel of the UE for PRS measurement and/or reporting. For example, the BS/LMF/location server may configure/instruct the UE to perform measurement, such as ToA or RSTD, with respect to a specific RX panel and to perform measurement related to angle, such as AoA, with respect to another panel.

The BS/LMF/location server may configure/instruct the UE to use a specific panel (e.g., an RX panel for DL or a TX panel for UL) in a specific PRS block, a specific PRS occasion, and/or a specific PRS occasion group.

The BS/LMF/location server may configure/instruct the UE to use a specific panel (e.g., an RX panel for DL or a TX panel for UL) for measurement for a specific PRS resource and/or a PRS resource set.

The UE may report AoA values measured for respective RX panels to the BS/LMF/location server. However, when the difference between AoA values measured for respective RX panels is less than a specific threshold value, the UE may report only an AoA value measured for a specific panel or an average value of AoA values measured for the RX panels. This operation of the UE may be indicated/configured by the BS/LMF/location server. The UE also reports information about a measured panel of the UE and an AoA value for the measurement panel together.

E-CID-like scheme base

Like the E-CID scheme of the LTE system, cell information that the UE receives may be used for UE positioning even in the NR system. In the NR system, different PRS sets such as a CSI-RS may be allocated to different TPs/BSs or the same TP/BS in consideration of a plurality of TPs/BSs using multiple beams. UE positioning may be performed as follows using a PRS set ID.

1) When PRS resource sets are allocated to different BSs/TPs/cells:

When different PRS resource sets are allocated to different TPs/BSs/cells, the UE may report PRS resource set indexes to the LMF/location server so that the LMR/location service may recognize the position of the UE. The UE may be configured/instructed to report a maximum RSRP/RSSI/signal-to-interference-plus-noise ratio (SINR) and/or AoA value together with the PRS resource sets.

For example, as the result of performing measurement for each PRS resource set, the UE may be configured/instructed to report a PRS resource set ID in which a PRS resource having maximum RSRP/RSSI is included to the BS/LMF/location server. For example, it is assumed that TRP#0 transmits PRS resources #00 to #03 through 4 different TX beams, PRS resources #00 to #03 are included in PRS resource set #0, TRP#1 transmits PRS resources #10, #20, #30, and #40 through 4 different TX beams, and the PRS resources #10 to #40 are included in a PRS resource set #1. When the RSRP/RSSI of PRS resource #00 is the largest, the UE reports an index of the PRS resource set in which PRS resource #00 is included to the BS/LMF/location server, and the BS/LMF/location server may recognize the position of the UE through the index of the PRS resource set. In other words, since one PRS resource set corresponds to one TP/BS, if the UE reports the PRS resource set ID having the maximum RSRP/RSSI to the BS/LMF/location server, the BS/LMF/location server may estimate a TP/BS nearest the position of the UE and recognize an approximate position of the UE without additional calculation.

According to configuration of the BS/TP/location server and/or an environment in which the UE performs an operation, the UE may report an RSTD/ToA value and a PRS resource set ID corresponding to the RSTD/ToA value, rather than the maximum RSRP/RSSI, to the BS/LMF/location server. In this case, a minimum RSTD/ToA value may be reported as the RSTD/ToA value and a PRS resource set ID having the minimum RSTD/ToA value may be reported to the BS/LMF/location server.

The UE may also be instructed/configured to report, to the LMF/location server, information about a PRS resource set, such as a PRS resource set index, and information (e.g., a PRS resource index and an RSRP/RSSI value corresponding thereto) related to a PRS resource having a maximum measurement value (e.g., maximum RSRP/RSRQ/RSSI/SINR) among PRS resources included in the corresponding PRS resource set.

The UE reports the PRS resource set index to the LMF/location server so that the LMF/location server recognizes a TP/BS/cell of coverage in which the UE is positioned. The UE additionally report a PRS resource index having a maximum measurement value to the BS/LMF/location server so that the BS/LMF/location server accurately recognizes information about the position of the UE within the TP/BS/cell. If the LMF/location server is aware of direction information of a TX beam for each PRS resource of a specific TP/BS/cell, the LMF/location server recognizes the position, direction, and/or distance of the UE from the specific TP/BS.

The UE may be instructed/configured to report information about a PRS resource (e.g., a PRS resource index) having a maximum measurement value (e.g., maximum RSRP/RSRQ/RSSI/SINR) among configured PRS resources to the LMF/location server, without information about a PRS resource set.

Even when the UE is configured with one PRS resource set or multiple PRS resource sets, if PRS resources are not shared between different PRS resource sets, the position of the UE may be recognized even if information about a specific PRS resource is reported to the BS/LMF/location server.

2) When PRS resource sets are allocated to one TRP/BS/cell:

When different PRS resource sets are allocated to the same TRP/BS/cell, the UE may report an ID for identifying the TRP/BS/cell to which the PRS resource sets are allocated, a PRS resource index, and/or a PRS resource set index to the LMF/location server, so that the LMF/location server may recognize the position of the UE. In this case, the UE may report a PRS resource index and/or a PRS resource set index having a maximum measurement value (e.g., RSRP/RSSI/SINR).

When different PRS resource sets are allocated to one TRP/BS/cell, different PRS resource sets may be used for different TX/RX panels of the same TRP/BS/cell. For example, one PRS resource set may be used per TX/RX panel and multiple TX/RX beams used in each panel may be transmitted through multiple PRS resources within one PRS resource set. Since each panel may have directivity in a specific direction in different regions, a TRP/BS/cell and/or a region in which the UE is positioned may be identified using an ID of the TRP/BS/cell and a PRS resource set ID.

In the LTE system, when a cell in which the UE is positioned is changed for an E-CID scheme, the UE reports information about the changed cell. Based on this premise, the following reporting method may be considered in the NR system.

For RS (e.g., CSI-RS and/or PRS) resources for which the UE performs measurement, an RS resource set in which an RS resource having a maximum measurement value (e.g., RSRP/RSSI/SINR) is included may be changed. If a cell or cell ID in which the UE is positioned is changed, the UE may report information indicating that the cell or cell ID has been changed, information about the changed cell, and/or information about the changed RS resource set to the LMF/location server.

Since information about a BS/TRP/cell in which the UE is positioned or information about a specific region within a specific BS/TRP/cell may be identified by the information about the RS resource set, triggering reporting based on the premise that the cell or cell ID in which the UE is positioned has been changed may be usefully used. When persistent measurement acquirement is needed, the RS may be limited to an RS which is periodically/semi-persistently transmitted.

For UE positioning, measurement for the RS may be configured with a considerably long period. The RS may be additionally configured for UE positioning. Particularly, for the E-CID based scheme, a specific RS resource and/or RS resource set may be configured.

If an RS resource set in which RS resources having a maximum measurement value (e.g., maximum RSRP/RSSI/SINR) are included is changed with respect to RS (e.g., CSI-RS) resources for which the UE performs measurement, the UE may report information indicating that the RS resource set has been changed and/or information about the changed RS resource set to the LMF/location server. In this case, the meaning of "the RS resource set has been changed" may indicate that a TP/BS/cell in which the UE is positioned has been changed.

Angle information base

For an RS (e.g., a PRS or a CSI-RS) transmitted by the TRP/BS/cell, the UE may report angle information such as AoA to the LMF/location server. In this case, the beam sweeping operation of the BS/TRP needs to be considered.

The UE may perform measurement for received signal strength, such as RSRP/RSSI/SINR, and measurement for AoA, with respect to all RS resources included in a configured RS resource set (e.g., a PRS resource set). The UE may report an AoA value for an RS resource having the largest RSRP/RSSI/SINR value to the BS/LMF/location server and the BS/LMF/location server may configure such an operation for the UE. The UE may also report an RS resource index and/or a corresponding RSRP/RSSI value, together with the AoA information, to the LMF/location server and the BS/LMF/location server may configure/instruct the UE to perform such an operation.

AoA of the UE may greatly vary according to a TX beam direction. An RS may be transmitted through a different TX beam according to each RS resource. To improve the accuracy of UE positioning, the UE may measure AoA for an RS resource transmitted through a beam having the largest RSRP/RSSI/SINR value of a received RS resource and report the measured AoA value to the BS/LMF/location server.

The above-described operation may be performed with a DL beam management protocol. For example, when performing DL beam sweeping by configuring RS resource sets, the UE may perform measurement for AoA together with measurement for RSRP/RSSI/SINR for a plurality of RS resources included in an RS resource set. However, the UE may report information about RSRP/RSSI/SINR to the BS and report information about AoA to the LMF/location server.

Additionally, a positioning scheme using a time difference such as OTDOA and a positioning scheme using AoA may be used together to improve positioning accuracy.

If a single RS resource set is configured in one TRP/BS/cell and different RS resource sets are configured in different TRPs/BSs/cells, the UE may calculate and report a ToA difference between RS resources included in different RS resource sets upon calculating an RSTD by receiving RSs transmitted in different TRPs/BSs.

The UE may perform measurement for both ToA and AoA with respect to all RS resources included in an RS resource set such as a PRS resource set. The UE may report information about an RS resource having a minimum ToA, information about the minimum ToA, and/or a corresponding AoA value to the LMF/location server. When specific RS resources for measurement and reporting for timing information and/or angle information are indicated/configured to/for the UE, the UE may report AoA for the indicated/configured RS resources and an RSTD value between the indicated/configured RS resources together.

If different RS resource sets are transmitted by different TRPs/BSs/cells, the UE may acquire measurement for ToA and/or AoA with respect to RS resources included in each RS resource set and report a time difference (e.g., RSTD) value between RS resources having minimum ToAs in respective RS resource sets and an AoA value for an RS resource indicating a minimum ToA in each RS resource set to the LMF/location server.

RS related common sequence base

To reduce complexity for a cross-correlation operation of the UE, when RSs such as PRSs are transmitted by a plurality of TRPs/BSs/cells, RS resources to which the same sequence is allocated may be simultaneously transmitted by a single frequency network (SFN) scheme and ToA for the RS resources may be measured.

Since the same sequence is applied to the PRSs transmitted by a plurality of BSs/TRPs, although ToA information may not be obtained by distinguishing between TRPs/cells, the PRSs to which the same sequence is allocated may be used to adjust a cross-correlation search window for receiving PRSs using independent sequences in different BSs/cells. In the RS based common sequence scheme, the same RS resource may be transmitted by the multiple TPs/BSs or only RS resource IDs differ and the same time/frequency/sequence may be allocated. However, in this case, a time domain operation and/or periodicity may differ.

The operation of the UE for the above-described RS based common sequence scheme may be as follows.

1) ToA reporting: Since the RSs are transmitted not by one TP/BS but by multiple BSs/TPs, reporting of a first peak in cross-correlation may not be greatly meaningful. Therefore, the UE may report an average ToA value to the BS/LMF/location server. The UE may also report a ToA value corresponding to a first peak and a ToA value corresponding to a last peak to the BS/LMF/location server.

2) RSTD reporting: The UE may report a maximum RSTD value based on the measured ToA value to the BS/LMF/location server.

For reporting by the UE as described above, the BS/LMF/location server may indicate to the UE that the RS based common sequence transmission scheme in which specific RS resources, such as PRSs, and/or specific RS resource sets are simultaneously transmitted by a plurality of TRPs/BSs/cells is used. In this case, with respect to the indicated configured RS resources and/or RS resource sets, the UE may recognize that the UE should identify arrival times of RSs transmitted by the plural BSs/TRPs rather than searching for only one first peak exceeding a specific threshold value.

For example, if an average ToA and/or a maximum RSTD is configured/indicated by the BS/LMF/location server as reporting content for specific RS resources such as PRS resources or CSI-RS resources, since the specific RS resources are simultaneously transmitted by multiple TRPs/BSs, the UE may recognize that the specific RS resources serve to adjust a cross-correlation search window by identifying arrival times of the RSs transmitted by the multiple TRPs/BSs rather than reporting a first peak exceeding a specific threshold value through one cross-correlation operation.

The RSs may be dedicatedly configured/indicated RSs for positioning or CSI-RSs. In the case of the CSI-RSs, the BS/LMF/location server may indicate to the UE that specific CSI-RS resources and/or CSI-RS resource sets are used for positioning. Alternatively, if ToA/RSTD is indicated/configured as reporting content indicated in association/linkage with a specific configured CSI-RS resource and/or CSI-RS resource set, the UE may recognize that the CSI-RSs are used for positioning.

The BS/LMF/location server may configure/reconfigure the cross-correlation search window used by the UE during transmission of a PRS using a sequence independently allocated by a specific TRP/BS/cell based on reporting information of the UE. For example, the BS/LMF/location server may reconfigure/configure, for the UE, a search window for a TRP/BS that has allocated a common sequence based on a minimum ToA and a maximum ToA. The above-described reporting operation may be configured/indicated in consideration of TX/RX beam sweeping. For example, a ToA/RSTD reporting operation for a specific TX beam or specific PRS resource may be configured.

CSI-RS base

The BS/LMF/location server may use a CSI-RS for UE positioning. For example, a CSI-RS for beam management may be used for UE positioning. Alternatively, an additional CSI-RS resource and/or a CSI-RS resource set may be allocated for UE positioning.

The BS/LMF/location server may configure a CSI-RS resource and/or a CSI-RS resource set for the UE and also configure/indicate, for/to the UE, a ToA, RSTD, and/or AoA as a reporting configuration linked to the CSI-RS resource and the CSI-RS resource set.

For example, only a CSI-RS resource set in which a higher layer parameter "repetition" is configured may be limitedly used for UE positioning. ToA/RSTD reporting may be configured/indicated for/to the UE in association with a CSI-RS resource set and/or a CSI-RS resource setting in which the higher layer parameter "repetition" is set to "ON" or "OFF". If the UE is configured/instructed to report ToA/RSTD measurement together with RSRP information acquired through the CSI-RS to the BS, the BS may transmit information about ToA/RSTD to the LMF/location server. Alternatively, the LMF/.location server may request that the BS transmit the information about ToA/RSTD.

The BS/LMF/location server may configure/instruct the UE to report ToA/RSTD using the CSI-RS. The BS/LMF/location server may configure, for the UE, a CSI-RS resource and/or a CSI-RS resource set and also configure a search window for a cross-correlation operation in association/linkage with the CSI-RS resource and/or CSI-RS resource set. Such a search window may be configured only when reporting content is ToA/RSTD in linkage with a reporting configuration for the CSI-RS resource and/or CSI-RS resource set. To configure the search window for the UE in linkage with the reporting content, the LMF/location server may inform the BS of the search window.

In regard to the reporting configuration related to ToA, the UE may be configured to report ToA among ToA values measured for all CSI-RS resources of a specific CSI-RS resource set. In this case, a minimum ToA among ToA measurement values for CSI-RS resources of the CSI-RS resource set may be reported to the BS/LMF/location server. Alternatively, the minimum ToA and a CSI-RS resource index corresponding thereto may be reported to the BS/LMF/location server. The above-described operation of the UE may be configured/indicated to the UE by the BS/LMF/location server.

The BS may configure a specific CSI-RS resource set such that the UE may measure ToA for a specific TP/BS. When the configuration parameter "repetition" of the CSI-RS resource set is set to "OFF", the TP/BS may transmit the CSI-RS on a plurality of symbols while sweeping a TX beam. The UE may measure, through a fixed RX beam, ToA for CSI-RS resources transmitted through a plurality of TX beams by the TP/BS. Since received power of the UE for a line-of-sight (LoS) component may differ according to a TX beam direction, ToA values measured for CSI-RS resources may differ. Accordingly, it is desirable to report a value that has reflected LoS best among LoS measurement values for respective CSI-RS resources to the BS/LMF/location server.

For example, generally, since a CSI-RS resource having the shortest ToA may be recognized as a value that has reflected LoS best, the UE may report the CSI-RS resource having the shortest ToA to the BS/LMF/location server. ToA and RSRP may be used together, so that the UE may report a CSI-RS resource having the shortest ToA and a CSI-RS resource having the largest RSRP, among CSI-RS resources on which ToA is shorter than a first threshold value and RSRP is larger than a second threshold value, to the BS/LMF/location server. This may be equally applied even when the CSI-RS resource set is configured as repetition="OFF".

The CSI-RS may UE-transparently operate in a multi-cell and/or multi-TRP environment. Accordingly, even for UL-based UE positioning, the UE may transmit a UL RS such as an SRS in a direction corresponding to a minimum ToA. For example, when a specific TP/BS transmits a plurality of CSI-RS resources included in a specific CSI-RS resource set while performing TX beam sweeping in the time domain, the UE may transmit the SRS in a direction corresponding to a specific CSI-RS resource having the minimum ToA.

Specifically, when a specific CSI-RS resource set is configured as repetition="ON", the UE may recognize that the CSI-RS is transmitted in a plurality of symbols through the same TX beam by a specific TP/BS. The UE may measure ToA for each CSI-RS resource while sweeping an RX beam as many times as the number of CSI-RS resources included in the CSI-RS resource set and determine an RX beam direction in which a minimum ToA value may be obtained among configured CSI-RS resources.

The UE may transmit a UL RS such as an SRS based on the determined RX beam direction while UTDOA based UE positioning is performed. That is, the UE may transmit the SRS in the direction of a beam corresponding to a CSI-RS resource of the CSI-RS resource set. In this case, the BS may not configure additional quasi co-location (QCL) for the UE and the BS/LMF/location server may configure/instruct the UE to determine a UL beam direction as a direction corresponding to a CSI-RS resource with a minimum ToA value.

The above-described method may be extended to/applied to/used in a PRS. The UE may measure ToA for a PRS transmitted through a plurality of TX beams by a specific TP/BS and transmit a UL RS such as an SRS in a beam direction corresponding to a PRS resource having a minimum ToA among measured ToA values. The BS/LMF/location server may configure/indicate the above operation.

Unlike the CSI-RS, the PRS may have no configuration of repetition="OFF" or repetition="ON". In this case, the PRS block/PRS occasion/PRS occasion group may be defined/configured/indicated as described above in consideration of TX/RX beam sweeping. In the case of the PRS, a beam through which a UL SRS is transmitted to a specific TRP/BS in linkage with a physical cell ID or a virtual cell ID may be configured/indicated in units of a specific TP/cell or a specific TP/cell group. This operation may be configured/indicated for/to the UE by the BS/LMF/location server.

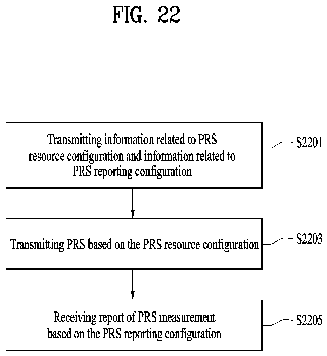

FIGS. 22 to 25 are views illustrating operation implementation examples of a UE, a BS, and a location server according to an embodiment of the present disclosure.

FIG. 22 is a view illustrating an operation implementation example of the BS according to an embodiment of the present disclosure. Referring to FIG. 22, the BS may transmit information about a PRS resource configuration and information about a PRS reporting configuration (S2201). Details of a method of configuring a PRS resource and PRS reporting and information for the method may be based on the above description.

The BS may transmit a PRS based on the PRS resource configuration (S2203) and receive reporting related to PRS measurement based on the PRS reporting configuration (S205). A detailed method in which the BS transmits the PRS and receives reporting related to PRS measurement may be based on the above description.

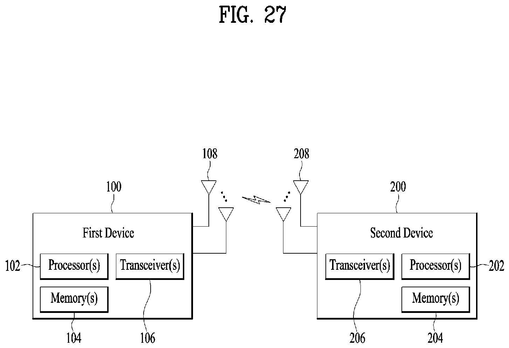

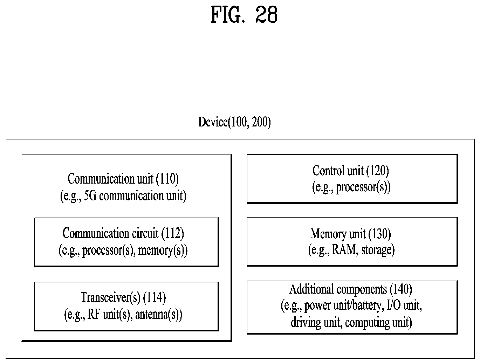

The BS of FIG. 22 may be any one of various devices of FIGS. 27 to 30. For example, the BS of FIG. 22 may be a second wireless device 200 of FIG. 27 or a wireless device 100 or 200 of FIG. 28. In other words, the operation of the BS described in FIG. 22 may be implemented or performed by any one of the various devices of FIGS. 27 to 30.

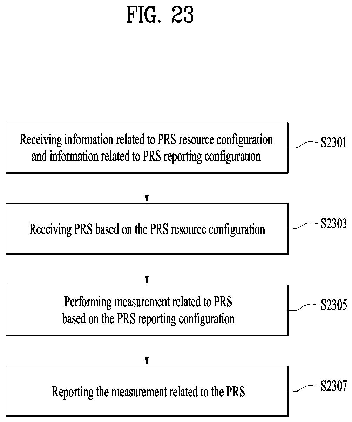

FIG. 23 is a view illustrating an operation implementation example of the UE according to an embodiment of the present disclosure. Referring to FIG. 23, the UE may receive information about a PRS resource configuration and information about a PRS reporting configuration (S2301). Details of a method of configuring a PRS resource and PRS reporting and information for the method may be based on the above description.

The UE may receive a PRS based on the PRS resource configuration (S2303). The UE may perform measurement related to the PRS based on the received PRS and the PRS reporting configuration (S2305) and report measurement related to the PRS (S2307). A detailed method in which the UE receives the PRS and performs and reports related measurement may be based on the above description.

The UE of FIG. 23 may be any one of various devices of FIGS. 27 to 30. For example, the UE of FIG. 23 may be a first wireless device 100 of FIG. 27 or a wireless device 100 or 200 of FIG. 28. In other words, the operation of the UE described in FIG. 23 may be implemented or performed by any one of the various devices of FIGS. 27 to 30.

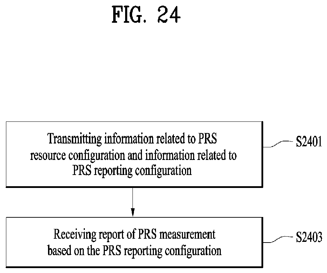

FIG. 24 is a view illustrating an operation implementation example of the location server according to an embodiment of the present disclosure. The location server may transmit information about a PRS resource and information about a PRS reporting configuration (S2401). Details of a method of configuring a PRS resource and PRS reporting and information for the method may be based on the above description.

The location server may receive reporting related to PRS measurement based on the PRS reporting configuration (S2403). A detailed method in which the location server receives reporting related to PRS measurement may be based on the above description.

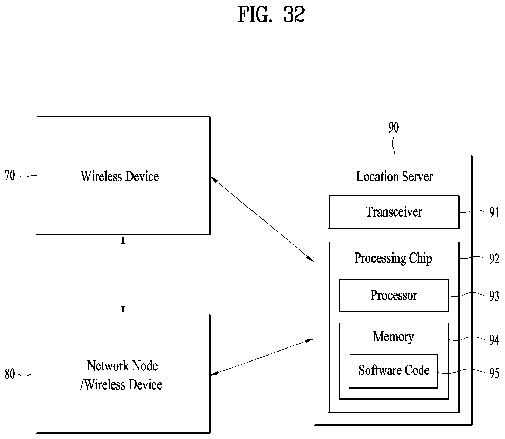

The location server of FIG. 24 may be a location server 90 described in FIG. 32. In other words, the operation described in FIG. 24 may be performed or operated by the location server 90 of FIG. 32.

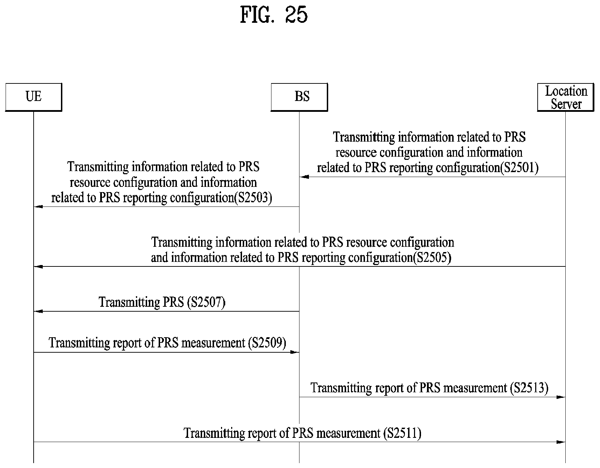

FIG. 25 is a view illustrating an operation implementation example of a network according to an embodiment of the present disclosure. Referring to FIG. 25, the location server may transmit information about a PRS resource configuration and information about a PRS reporting configuration to the BS (S2501) and the BS may transmit the information about the PRS resource configuration and the information about the PRS reporting configuration to the UE (S2503). The location server may directly transmit the information about the PRS resource configuration and the information about the PRS reporting configuration to the UE (S2505). In other words, if step S2505 is performed, steps S2501 and S2503 may be omitted. That is, step S2505 and steps S2501 and S2503 may be selectively performed.

Detailed information and/or content for configuring the information about the PRS resource configuration and the information about the PRS reporting configuration transmitted in steps S2501 to S2505 may be based on the above description.

The BS may transmit a PRS to the UE based on the information related to the PRS resource configuration to the UE (S2507) and the UE may transmit PRS measurement reporting to the BS and/or the location server by measuring the received PRS (S2509 and S2511). If the UE transmits the PRS measurement reporting to the BS, the BS may transmit the PRS measurement reporting to the location server (S2513). In other words, if the UE directly transmits the PRS measurement reporting to the location server as in S2511, steps S2509 and S2513 may be omitted. That is, S2511 and S2509/S2513 may be selectively performed. A detailed method of performing the PRS measurement reporting illustrated in FIG. 25 may be based on the above description.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

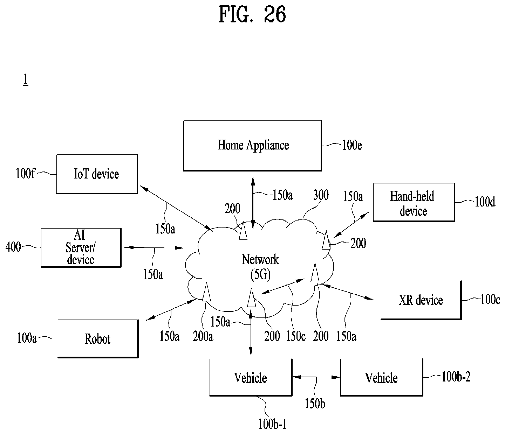

FIG. 26 illustrates a communication system 1 applied to the present disclosure.

Referring to FIG. 26, a communication system 1 applied to the present disclosure includes wireless devices, BSs, and a network. Herein, the wireless devices represent devices performing communication using radio access technology (RAT) (e.g., 5G new RAT (NR)) or long-term evolution (LTE)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 27 illustrates wireless devices applicable to the present disclosure.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, commands and/or operations controlled by the processor 102 and stored in the memory 104 in the wireless device 100 according to an embodiment of the present disclosure will be described below.

While the operations are described in the context of a control operation of the processor 102 from the perspective of the processor 102, software code for performing these operations may be stored in the memory 104.

The processor(s) 102 may control the transceiver(s) 106 to receive information about a PRS resource configuration and information about a PRS reporting configuration. Details of a method of configuring a PRS resource and PRS reporting and information for the method may be based on the above description.

The processor(s) 102 may control the transceiver(s) 106 to receive a PRS based on the PRS resource configuration. The processor(s) 102 may perform measurement related to the PRS based on the received PRS and the PRS reporting configuration and control the transceiver(s) 106 to report measurement related to the PRS. A detailed method in which the processor(s) 102 control the transceiver(s) 106 to receive the PRS and control the transceiver(s) 106 to measure and report related measurement may be based on the above description.

Specifically, instructions and/or operations, which are controlled by the processor(s) 202 of the second wireless device 200 and stored in the memory(s) 204, according to an embodiment of the present disclosure, will now be described.

While the following operations are described in the context of a control operation of the processor(s) 202 from the perspective of the processor(s) 202, software code for performing these operations may be stored in the memory(s) 204. The processor(s) 202 may control the transceiver(s) to transmit, to the location server 90 of FIG. 32, information indicating that an SS/PBCH block and/or a CSI-RS is used as a PRS resource PRS resource or the SS/PBCH block or the CSI-RS will be used to determine a TX/RX beam for transmitting and receiving the PRS.

The processor(s) 202 may control the transceiver(s) to transmit information about a PRS resource configuration and information about a PRS reporting configuration. Details of a method of configuring a PRS resource and PRS reporting and information for the method may be based on the above description.

The processor(s) 202 may control the transceiver(s) 206 to transmit a PRS based on the PRS resource configuration and control the transceiver(s) 206 to receive reporting related to PRS measurement based on the PRS reporting configuration. A detailed method in which the processor(s) 202 control the transceiver(s) 106 to transmit the PRS and control the transceiver(s) 206 to receive reporting related to PRS measurement may be based on the above description.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

In the present disclosure, the at least one memory 104 or 204 may store instructions or programs, and the instructions or programs may cause, when executed, at least one processor operably connected to the at least one memory to perform operations according to the above-described embodiments or implementations of the present disclosure.

In the present disclosure, a computer-readable storage medium may store at least one instruction or computer program, and the at least one instruction or computer program may cause, when executed by at least one processor, the at least one processor to perform operations according to the above-described embodiments or implementations of the present disclosure.

In the present disclosure, a processing device or apparatus may include at least one processor and at least one computer memory which is connectable to the at least one processor. The at least one computer memory may store instructions or programs, and the instructions or programs may cause, when executed, the at least one processor operably connected to the at least one memory to perform operations according to the above-described embodiments or implementations of the present disclosure.

FIG. 28 illustrates another example of a wireless device applied to the present disclosure. The wireless device may be implemented in various forms according to a use-case/service (refer to FIG. 26)

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110. Accordingly, the detailed operating procedures of the control unit 120 and the programs/code/commands/information stored in the memory unit 130 may correspond to at least one operation of the processors 102 and 202 of FIG. 27 and at least one operation of the memories 104 and 204 of FIG. 27.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

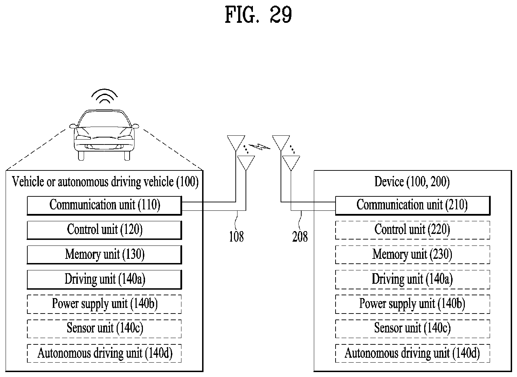

FIG. 29 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 29, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

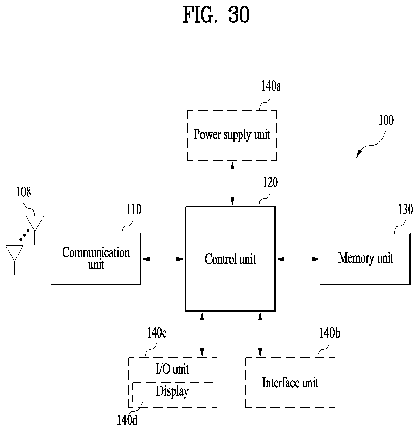

FIG. 30 illustrates a hand-held device applied to the present disclosure. The hand-held device may include a smartphone, a smartpad, a wearable device (e.g., a smartwatch or smartglasses), or a portable computer (e.g., a notebook). The hand-held device may be referred to as a mobile station (MS), a user terminal (UT), a mobile subscriber station (MSS), a subscriber station (SS), an advanced mobile station (AMS), or a wireless terminal (WT).

Referring to FIG. 30, a hand-held device 100 may include an antenna unit 108, a communication unit 110, a control unit 120, a memory unit 130, a power supply unit 140a, an interface unit 140b, and an input/output (I/O) unit 140c. The antenna unit 108 may be configured as a part of the communication unit 110. Blocks 110 to 130/140a to 140c correspond to the blocks 110 to 130/140 of FIG. 28, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an application processor (AP). The memory unit 130 may store data/parameters/programs/code/commands needed to drive the hand-held device 100. The memory unit 130 may also store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection to external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may covert the information/signals stored in the memory into radio signals and transmit the converted radio signals to other wireless devices directly or to the BS. The communication unit 110 may receive radio signals from other wireless devices or the BS and then restore the received radio signals into original information/signals. The restored information/signals may be stored in the memory unit 130 and may be output as various types (e.g., text, voice, image, video, or haptic type) through the I/O unit 140c.

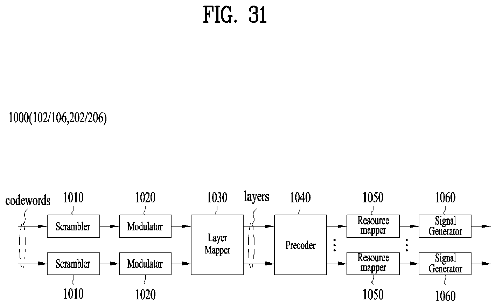

FIG. 31 illustrates a signal process circuit for a transmission signal.

Referring to FIG. 31, a signal processing circuit 1000 may include scramblers 1010, modulators 1020, a layer mapper 1030, a precoder 1040, resource mappers 1050, and signal generators 1060. An operation/function of FIG. 31 may be performed, without being limited to, the processors 102 and 202 and/or the transceivers 106 and 206 of FIG. 27. Hardware elements of FIG. 31 may be implemented by the processors 102 and 202 and/or the transceivers 106 and 206 of FIG. 27. For example, blocks 1010 to 1060 may be implemented by the processors 102 and 202 of FIG. 27. Alternatively, the blocks 1010 to 1050 may be implemented by the processors 102 and 202 of FIG. 27 and the block 1060 may be implemented by the transceivers 106 and 206 of FIG. 27.

Codewords may be converted into radio signals via the signal processing circuit 1000 of FIG. 31. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources.

The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 31. For example, the wireless devices (e.g., 100 and 200 of FIG. 28) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

To perform the embodiments of the present disclosure, there may be provided the location server 90 as illustrated in FIG. 32. The location server 90 may be logically or physically connected to a wireless device 70 and/or a network node 80. The wireless device 70 may be the first wireless device 100 of FIG. 27 and/or the wireless device 100 or 200 of FIG. 28. The network node 80 may be the second wireless device 100 of FIG. 27 and/or the wireless device 100 or 200 of FIG. 28.

The location server 90 may be, without being limited to, an AMF, an LMF, an E-SMLC, and/or an SLP and may be any device only if the device serves as the location server 90 for implementing the embodiments of the present disclosure. Although the location server 90 has used the name of the location server for convenience of description, the location server 90 may be implemented not as a server type but as a chip type. Such a chip type may be implemented to perform all functions of the location server 90 which will be described below.

Specifically, the location server 90 includes a transceiver 91 for communicating with one or more other wireless devices, network nodes, and/or other elements of a network. The transceiver 91 may include one or more communication interfaces. The transceiver 91 communicates with one or more other wireless devices, network nodes, and/or other elements of the network connected through the communication interfaces.

The location server 90 includes a processing chip 92. The processing chip 92 may include at least one processor, such as a processor 93, and at least one memory device, such as a memory 94.

The processing chip 92 may control one or more processes to implement the methods described in this specification and/or embodiments for problems to be solved by this specification and solutions for the problems. In other words, the processing chip 92 may be configured to perform at least one of the embodiments described in this specification. That is, the processor 93 includes at least one processor for performing the function of the location server 90 described in this specification. For example, one or more processors may control the one or more transceivers 91 of FIG. 32 to transmit and receive information.

The processing chip 92 includes a memory 94 configured to store data, programmable software code, and/or other information for performing the embodiments described in this specification.

In other words, in the embodiments according to the present specification, when the memory 94 is executed by at least one processor, such as the processor 93, the memory 94 allows the processor 93 to perform some or all of the processes controlled by the processor 93 of FIG. 32 or stores software code 95 including instructions for performing the embodiments described in this specification.

Specifically, instructions and/or operations, which are controlled by the processor 93 of the location server 90 and are stored in the memory 94, according to an embodiment of the present disclosure will now be described.

While the operations are described in the context of a control operation of the processor 93 from the perspective of the processor 93, software code for performing these operations may be stored in the memory 104. The processor 93 may control the transceiver 91 to transmit information about a PRS resource configuration and information about a PRS reporting configuration. Details of a method of configuring a PRS resource and PRS reporting and information for the method may be based on the above description.

The processor 93 may control the transceiver 91 to receive reporting related to PRS measurement based on the PRS report configuration. A detailed method in which the processor 93 controls the transceiver 91 to receive reporting related to PRS measurement may be based on the above description.

The implementations described above are those in which the elements and features of the present disclosure are combined in a predetermined form. Each component or feature shall be considered optional unless otherwise expressly stated. Each component or feature may be implemented in a form that is not combined with other components or features. It is also possible to construct implementations of the present disclosure by combining some of the elements and/or features. The order of the operations described in the implementations of the present disclosure may be changed.

Some configurations or features of certain implementations may be included in other implementations, or may be replaced with corresponding configurations or features of other implementations. It is clear that the claims that are not expressly cited in the claims may be combined to form an implementation or be included in a new claim by an amendment after the application.

The specific operation described herein as being performed by the base station may be performed by its upper node, in some cases. That is, it is apparent that various operations performed for communication with a terminal in a network including a plurality of network nodes including a base station can be performed by the base station or by a network node other than the base station. A base station may be replaced by terms such as a fixed station, a Node B, an eNode B (eNB), an access point, and the like.

It will be apparent to those skilled in the art that the present disclosure may be embodied in other specific forms without departing from the scope of the disclosure as defined by the appended claims. Accordingly, the above description should not be construed in a limiting sense in all respects and should be considered illustrative. The scope of the present disclosure should be determined by rational interpretation of the appended claims.

**Industrial Applicability**

While the above-described method of acquiring positioning information and the apparatus therefor have been described in the context of a 5G NewRAT system, the method and apparatus are also applicable to various other wireless communication systems.

**Claims**

1. A method of reporting a measurement by a user equipment, UE (100), in a wireless communication system, the method comprising:

   receiving a synchronization signal /physical broadcast channel, SS/PBCH, block related to cell search;
   obtaining system information from a PBCH included in the SS/PBCH block;
   receiving first information related to a plurality of positioning reference signal, PRS, resource sets including a plurality of PRS resources;
   receiving PRSs transmitted by transmission and reception points, TRPs, based on the first information; and
   reporting the measurement for a Reference Signal Time Difference, RSTD, measured based on the PRSs, ,
   wherein the UE (100) further reports identifiers for PRS resource sets used for the measurement among the plurality of PRS resource sets, and
   wherein multiple PRS resource sets among the plurality of PRS resource sets are associated with a TRP.

2. The method of claim 1, wherein the UE (100) further reports an identification information related to the TRP.

3. The method of claim 1, wherein the UE (100) communicates with at least one of another UE, a network, a base station, BS, or a self-driving vehicle.

4. A user equipment, UE (100), configured for reporting a measurement in a wireless communication system, the UE (100) comprising:

   at least one transceiver (110);
   at least one processor (120); and
   at least one memory (130) operably connected to the at least one processor (120) and configured to store instructions for causing, when executed, the at least one processor (120) to perform a specific operation,
   wherein the specific operation includes:

      receiving a synchronization signal /physical broadcast channel, SS/PBCH, block related to cell search through the at least one transceiver,
      obtaining system information from a PBCH included in the SS/PBCH block,
      receiving first information related to a plurality of positioning reference signal, PRS, resource sets including a plurality of PRS resources through at least one transceiver,
      receiving PRSs transmitted by transmission and reception points, TRPs, based on the first information, and
      reporting a measurement for a Reference Signal Time Difference, RSTD, measured based on the PRSs ,
      wherein the UE (100) is further configured for reporting identifiers for PRS resource sets used for the measurement among the plurality of PRS resource sets, and
wherein multiple PRS resource sets among the plurality of PRS resource sets are associated with a TRP.

**5.** The UE (100) of claim 4, further configured to report an identification information related to the TRP.

**6.** The UE (100) of claim 4, further configured to communicate with at least one of another UE, a network, a base station, BS, or a self-driving vehicle.

**Patentansprüche**

**1.** Verfahren zum Melden einer Messung durch eine Benutzerausrüstung, UE (100), in einem Drahtloskommunikationssystem, das Verfahren umfassend:

Empfangen eines Blocks aus Synchronisationssignal und physikalischem Rundfunkkanal, SS/PBCH, der sich auf die Zellensuche bezieht;
Erhalten von Systeminformationen aus einem im SS/PBCH-Block eingeschlossenen PBCH;
Empfangen erster Informationen, die sich auf eine Vielzahl von Positionierungsreferenzsignal-Ressourcensätzen, PRS, beziehen, die eine Vielzahl von PRS-Ressourcen einschließen;
Empfangen von PRSs, die von Sende- und Empfangspunkten, TRPs, basierend auf den ersten Informationen gesendet werden; und
Melden der Messung für eine Referenzsignal-Zeitdifferenz, RSTD, die basierend auf den PRSs gemessen wird, wobei die UE (100) ferner Kennungen für PRS-Ressourcensätze meldet, die für die Messung unter der Vielzahl von PRS-Ressourcensätzen verwendet werden, und
wobei mehrere PRS-Ressourcensätze unter der Vielzahl von PRS-Ressourcensätzen mit einem TRP verbunden sind.

**2.** Verfahren nach Anspruch 1, wobei die UE (100) ferner eine Identifikationsinformation in Bezug auf die TRP meldet.

**3.** Verfahren nach Anspruch 1, wobei die UE (100) mindestens mit einer anderen UE, einem Netzwerk, einer Basisstation, BS, oder einem selbstfahrenden Fahrzeug kommuniziert.

**4.** Benutzerausrüstung, UE (100), die zum Melden einer Messung in einem Drahtloskommunikationssystem konfiguriert ist, die UE (100) umfassend:

mindestens ein Sendeempfangsgerät (110);
mindestens einen Prozessor (120); und
mindestens einen Speicher (130), der funktionsfähig mit dem mindestens einen Prozessor (120) verbunden und so konfiguriert ist, dass er Anweisungen speichert, die, wenn sie ausgeführt werden, den mindestens einen Prozessor (120) veranlassen, einen bestimmten Vorgang durchzuführen, wobei der bestimmte Vorgang einschließt:

Empfangen eines Blocks aus Synchronisationssignal und physikalischem Rundfunkkanal, SS/PBCH, der sich auf die Zellensuche bezieht, durch den mindestens einen Sendeempfänger,
Erhalten von Systeminformationen aus einem im SS/PBCH-Block eingeschlossenen PBCH,
Empfangen von ersten Informationen, die sich auf eine Vielzahl von Positionierungsreferenzsignal-Ressourcensätzen, PRS, beziehen, die eine Vielzahl von PRS-Ressourcen einschließen, über mindestens einen Sendeempfänger,
Empfangen von PRSs, die von Sende- und Empfangspunkten, TRPs, basierend auf den ersten Informationen gesendet werden, und
Melden einer Messung für eine Referenzsignal-Zeitdifferenz, RSTD, gemessen basierend auf den PRSs, wobei die UE (100) ferner konfiguriert ist, um Kennungen für PRS-Ressourcensätze zu melden, die für die Messung unter der Vielzahl von PRS-Ressourcensätzen verwendet werden, und
wobei mehrere PRS-Ressourcensätze unter der Vielzahl von PRS-Ressourcensätzen mit einem TRP verbunden sind.

**5.** UE (100) nach Anspruch 4, die außerdem so konfiguriert ist, dass sie eine Identifikationsinformation in Bezug auf die TRP meldet.

**6.** UE (100) nach Anspruch 4, die außerdem so konfiguriert ist, dass sie mit mindestens einer anderen UE, einem Netzwerk, einer Basisstation, BS, oder einem selbstfahrenden Fahrzeug kommuniziert.

**Revendications**

**1.** Procédé de rapport d'une mesure par un équipement utilisateur, UE (100), dans un système de communication sans fil, le procédé comprenant :

la réception d'un bloc signal de synchronisation/canal de diffusion physique, SS/PBCH, relatif à une recherche de cellule ;
l'obtention d'informations système à partir d'un PBCH inclus dans le bloc SS/PBCH ;
la réception de premières informations relatives à une pluralité d'ensembles de ressources de signaux de référence de positionnement, PRS, comportant une pluralité de ressources de PRS ;
la réception de PRS émis par des points d'émission et de réception, TRP, sur la base des premières informations ; et
le rapport de la mesure d'une différence de temps entre signaux de référence, RSTD, mesurée sur la base des PRS,
dans lequel l'UE (100) rapporte en outre des identifiants pour les ensembles de ressources de PRS utilisés pour la mesure parmi la pluralité d'ensembles de ressources de PRS, et
dans lequel de multiples ensembles de ressources de PRS parmi la pluralité d'ensembles de ressources de PRS sont associés à un TRP.

**2.** Procédé selon la revendication 1, dans lequel l'UE (100) rapporte en outre des informations d'identification relatives au TRP.

**3.** Procédé selon la revendication 1, dans lequel l'UE (100) communique avec au moins un parmi un autre UE, un réseau, une station de base, BS, ou un véhicule autonome.

**4.** Équipement utilisateur, UE (100), configuré pour rapporter une mesure dans un système de communication sans fil, l'UE (100) comprenant :

au moins un émetteur-récepteur (110) ;
au moins un processeur (120) ; et
au moins une mémoire (130) connectée fonctionnellement à l'au moins un processeur (120) et configurée pour stocker des instructions pour amener, lorsqu'elles sont exécutées, l'au moins un processeur (120) à réaliser une opération spécifique,
dans lequel l'opération spécifique comporte :

la réception d'un bloc signal de synchronisation/canal de diffusion physique, SS/PBCH, relatif à une recherche de cellule par le biais de l'au moins un émetteur-récepteur,
l'obtention d'informations système à partir d'un PBCH inclus dans le bloc SS/PBCH, la réception de premières informations relatives à une pluralité d'ensembles de ressources de signaux de référence de positionnement, PRS, comportant une pluralité de ressources de PRS par le biais de l'au moins un émetteur-récepteur,
la réception de PRS émis par des points d'émission et de réception, TRP, sur la base des premières informations, et
le rapport d'une mesure d'une différence de temps entre signaux de référence, RSTD, mesurée sur la base des PRS,
dans lequel l'UE (100) est en outre configuré pour rapporter des identifiants pour les ensembles de ressources de PRS utilisés pour la mesure parmi la pluralité d'ensembles de ressources de PRS, et
dans lequel de multiples ensembles de ressources de PRS parmi la pluralité d'ensembles de ressources de PRS sont associés à un TRP.

**5.** UE (100) selon la revendication 4, configuré en outre pour rapporter des informations d'identification au TRP.

**6.** UE (100) selon la revendication 4, configuré en outre pour communiquer avec au moins un parmi un autre UE, un réseau, une station de base, BS, ou un véhicule autonome.

# FIG. 1

FIG. 2

100

| 110 | Communication Unit | | | Memory | 170 |
| 120 | Input Unit | Processor | | Output Unit | 150 |
| 130 | Learning Processor | | | Sensing Unit | 140 |

180

## FIG. 3

# FIG. 4

1

Home Appliance —100e

200— AI Server

300

Smartphone —100d

Cloud Network
(5G)

XR device —100c

100a— Robot

100b— Self-Driving
Vehicle

# FIG. 5

UE       eNB       MME

NAS ←————————————————————→ NAS

RRC ←——————→ RRC

PDCP ←——————→ PDCP

RLC ←——————→ RLC

MAC ←——————→ MAC

PHY ←——————→ PHY

(A) CONTROL-PLANE PROTOCOL STACK

UE       eNB       SAE Gateway

PDCP ←——————→ PDCP

RLC ←——————→ RLC

MAC ←——————→ MAC

PHY ←——————→ PHY

(B) USER-PLANE PROTOCOL STACK

# FIG. 6

INITIAL CELL SEARCH — P/S - SCH & [DLRS] & PBCH — S601

SYSTEM INFORMATION RECEPTION — PDCCH/ PDSCH (BCCH) — S602

RANDOM ACCESS PROCEDURE — PRACH (S603) — PDCCH/PDSCH (S604) — PUSCH (S605) — PDCCH/PDSCH (S606)

GENERAL DL/UL Tx/Rx S208 — PDCCH/PDSCH — PUSCH/PUCCH — S607
- DL/UL ACK/NACK
- UE CQI/PMI/RI REPORT USING PUSCH AND PUCCH

FIG. 7

FIG. 8

(a)

(b)

FIG. 9

## FIG. 10

| UE | NG-RAN | AMF | LMF | 5GC LCS Entities |
|----|--------|-----|-----|------------------|

1a. Location Service Request

1b. Location Service Request

2. Location Services Request

3a. NG-RAN Procedures

3b. UE Procedures

4. Location Services Response

5a. Location Services Response

5b. Location Service Response

FIG. 11

FIG. 12

## FIG. 13

# FIG. 14

FIG. 15

SSB periodicity (default : 20ms)

5ms window

SSB#1    SSB#2    · · ·    SSB#L

SSB burst set

FIG. 16

UE                                                                          BS

CSI related configuration information ──── S1601

CSI-RS ──── S1603

S1605 {

Compute CSI ── S1607

CSI report ──── S1609

## FIG. 17

# FIG. 18

# FIG. 19

DL only

UL only

DL control

UL control

Mixed UL - DL

Slot

DL          UL

# FIG. 20

FIG. 21

PRS occasion (N times repetition of a PRS block)

| PRS block | PRS block | . . . | PRS block |
|-----------|-----------|-------|-----------|

N times
RX beam sweeping

FIG. 22

| Transmitting information related to PRS resource configuration and information related to PRS reporting configuration | — S2201 |

| Transmitting PRS based on the PRS resource configuration | — S2203 |

| Receiving report of PRS measurement based on the PRS reporting configuration | — S2205 |

FIG. 23

| | |
|---|---|
| Receiving information related to PRS resource configuration and information related to PRS reporting configuration | S2301 |

| | |
|---|---|
| Receiving PRS based on the PRS resource configuration | S2303 |

| | |
|---|---|
| Performing measurement related to PRS based on the PRS reporting configuration | S2305 |

| | |
|---|---|
| Reporting the measurement related to the PRS | S2307 |

FIG. 24

| Transmitting information related to PRS resource configuration and information related to PRS reporting configuration | —— S2401 |

| Receiving report of PRS measurement based on the PRS reporting configuration | —— S2403 |

# FIG. 25

| UE | BS | Location Server |

Transmitting information related to PRS resource configuration and information related to PRS reporting configuration(S2501)

Transmitting information related to PRS resource configuration and information related to PRS reporting configuration(S2503)

Transmitting information related to PRS resource configuration and information related to PRS reporting configuration(S2505)

Transmitting PRS (S2507)

Transmitting report of PRS measurement (S2509)

Transmitting report of PRS measurement (S2513)

Transmitting report of PRS measurement (S2511)

EP 3 751 920 B1

FIG. 26

FIG. 27

# FIG. 28

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

FIG. 29

Vehicle or autonomous driving vehicle (100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108        208

Device (100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

FIG. 30

FIG. 31

1000(102/106,202/206)

codewords 1010          1020          1030  layers  1040          1050          1060

[Scrambler] → [Modulator] → [Layer Mapper] → [Precoder] → [Resource mapper] → [Signal Generator] →

[Scrambler] → [Modulator] →                              [Resource mapper] → [Signal Generator] →

1010          1020                                      1050          1060

FIG. 32

Wireless Device 70

Network Node /Wireless Device 80

Location Server 90

Transceiver 91

Processing Chip 92

Processor 93

Memory 94

Software Code 95

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3796587 A1

**Non-patent literature cited in the description**

- NR beam management supporting multi-gNB measurements for positioning. *3GPP Draft No. R1-1813583*

- RAT dependent NR positioning solutions. *3GPP Draft No. R1-1813592*